# EUROPÄISCHE PATENTSCHRIFT

(11) **EP 2 739 632 B1**
(45) Veröffentlichungstag und Bekanntmachung des Hinweises auf die Patenterteilung: **21.06.2017**
(21) Anmeldenummer: 12750524.6
(22) Anmeldetag: 02.08.2012
(51) Int. Cl.: C07F 9/535, C07F 17/00, B01J 31/22, C08F 36/08, C08F 136/08, B01J 31/02, C08G 63/82

(54) **eta5:eta1-CYCLOPENTADIENYLIDEN-PHOSPHORAN-CONSTRAINED-GEOMETRY-KOMPLEXE DER SELTENERD-METALLE**
eta5:eta1-CYCLOPENTADIENYLIDENE-PHOSPHORANE CONSTRAINED GEOMETRY COMPLEXES OF RARE EARTH METALS
COMPLEXES À GÉOMÉTRIE CONTRAINTE DE eta5: eta1-CYCLOPENTADIÉNYLIDÈNE-PHOSPHORANE DES MÉTAUX DE TERRES RARES

(30) Priorität: 02.08.2011 DE 102011080283
(43) Veröffentlichungstag der Anmeldung: 11.06.2014
(73) Patentinhaber: Rockwood Lithium GmbH, 65926 Frankfurt/M (DE)
(72) Erfinder: HILLESHEIM, Nina, 35037 Marburg (DE); SUNDERMEYER, Jörg, 35041 Marburg (DE)
(74) Vertreter: Rottmayer, Hans
(86) Internationale Anmeldenummer: PCT/EP2012/003292
(87) Internationale Veröffentlichungsnummer: WO 2013/017280

(56) Entgegenhaltungen:
- DE-A1-102007 057 854
- N S HILLESHEIM: "New Cyclopentadienyl-N-silylphosphazene and Cyclopentadienyliden-phosphorane complexes of Rare-Earth Metals", 7TH INTERNATIONAL CONFERENCE ON F ELEMENTS, ICFE 7, AUGUST 23-27, 2009, COLOGNE, GERMANY, 23. August 2009 (2009-08-23), XP55040574, Cologne, Germany
- KONSTANTIN A. RUFANOV ET AL: "Synthesis of (Indenylidene)phosphoranes ? A Novel Class of Ligand Precursors for Main-Group and Transition Metal Organometallics", EUROPEAN JOURNAL OF INORGANIC CHEMISTRY, Bd. 2004, Nr. 24, 1. Dezember 2004 (2004-12-01), Seiten 4759-4763, XP55040578, ISSN: 1434-1948, DOI: 10.1002/ejic.200400664
- ALEX R. PETROV ET AL: "P-Amino-cyclopentadienylidene-phosphorane s versus P-cyclopentadienyl-iminophosphoranes-tauto meric protic forms of a new bidentate CpPN ligand system", DALTON TRANSACTIONS, Nr. 7, 1. Januar 2008 (2008-01-01), Seite 909, XP55040848, ISSN: 1477-9226, DOI: 10.1039/b710419g
- RUFANOV KONSTANTIN A ET AL: "A lutetium cyclopentadienyl-phosphazene constrained geometry complex (CGC) : First isolobal analogues of group 4 cyclopentadienyl-silylamido CGC systems", EUROPEAN JOURNAL OF INORGANIC CHEMISTRY, WILEY-VCH VERLAG, WEINHEIM, DE, Nr. 19, 1. Januar 2005 (2005-01-01), Seiten 3805-3807, XP002525014, ISSN: 1434-1948, DOI: 10.1002/EJIC.200500529
- N S Hillesheim: "Cyclopentadienyliden-phosphorane: Bausteine für CpPC-Constrained-Geometry-Komplexe der Seltenerdmetalle", , 21. Oktober 2011 (2011-10-21), XP55040555, Philipps-Universität Marburg Gefunden im Internet: URL:http://archiv.ub.uni-marburg.de/diss/z 2011/0605/pdf/dnsh.pdf [gefunden am 2012-10-10]

## Beschreibung

Die Erfindung betrifft *η*⁵:*η*¹-Cyclopentadienyliden-phosphoran-Constrained-Geometry-Komplexe, abgekürzt CpPC-CGC, Verfahren zu deren Herstellung und Verwendung.

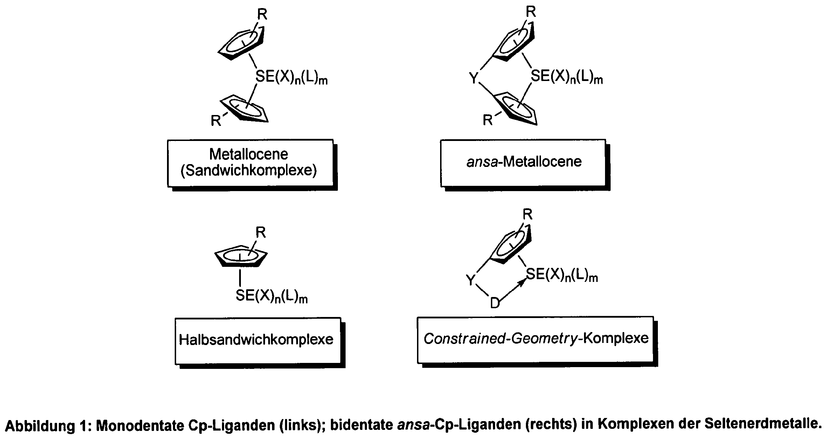

Mit der Entdeckung des Ferrocens 1951 erlangte der Cyclopentadienyl-Ligand (Cp) in der Organometallchemie von Übergangsmetallen ein herausragendes Ansehen und eroberte in Form von Bis(cyclopentadienyl) oder Metallocen-Komplexen schlagartig die Metalle des d-Blockes und des p-Blockes. Mit der Entwicklung der Tris-(Cyclopentadienide) der Lanthanoide und der 3. Gruppe durch WILKINSON und **BIRMINGHAM**, gelang diesem Liganden letztlich auch der Durchbruch in der stark hydrolyseempfindlichen Organometallchemie der Seltenerdmetalle (SE) und Synthesen verschiedener Bis-(Cyclopentadienyl)-Derivate folgten.
Der Begriff Metallocene wie er durch das Ferrocen bekannt wurde, wird nicht nur für reine Bis-(Cyclopentadienyl)-Komplexe verwendet, sondern auch für Komplexe mit Metallen, die weitere anionische Liganden (X) oder Neutralliganden (L) tragen in Form von Cp^{R}₂SE(X)ₙ(L)ₘ (Abbildung 1). Cp^{R}₂SE(+II) und Cp^{R}₂SE(+III)-Halogenide sind hervorragende Ausgangsverbindungen für Alkyl-, Hydrido- oder Amido-Spezies. Diese wiederum besitzen letztlich eine Reaktivfunktion für katalytische Anwendungen, vorallem in Hydrometallierungsreaktionen, Zyklisierungsreaktionen und Polymerisationsreaktionen von Olefinen. Elektronische oder sterische Parameter lassen sich durch Organylsubstituenten R an der Cyclopentadienyl-Einheit variieren. Besonders prominente Varianten zu C₅H₅ sind Pentamethylcyclopentadienyl C₅Me₄, Indenyl- und Fluorenyl-Einheiten (allg. Cp^{R}).
Eine Verbrückung Y (meist SiR₂, -CₙH₂ₙ-) beider Cp^{R}-Einheiten führt zu *ansa*-Metallocenen. Die Konformation des Komplexes wird fixiert, wodurch eine Erhöhung der LEWIS-Acidität des Metallzentrums erzielt wird, da das Katalysatorzentrum für größere Substratmoleküle in der Katalyse besser zugänglich gemacht wird. So ist die Aktivität des ansa-Lanthanocen-Katalysators {Me₂Si(C₅Me₄)₂SE(H)}₂ im Vergleich zum unverbrückten Lanthanocen {Cp*₂SE(H)}₂ in der Ethylenpolymerisation wie auch in der Copolymerisation von Ethen mit 1-Hexen zehnmal höher. Achirale *ansa*-Metallocene des Typs Me₂Si(C₅Me₄)₂LnR und Me₂Si(C₅Me₄)(C₅H₄)LnR und chirale ansa-Metallocene wurden in einer breiten Vielfalt dargestellt. Die chiralen ansa-Lanthanocene spielen eine entscheidende Rolle in der asymmetrischen Hydroaminierung, die erstmals von MARKS kurz nach der Entwicklung der hocheffizienten intramolekularen Hydroaminierung durch achirale Lanthanocene beschrieben wurde.
Aufgrund des erfolgreichen Einsatzes der ansa-Metallocene in der Polymerisationskatalyse, wuchs das Interesse, den sterischen Anspruch weiter zu vermindern und reine Halbsandwich-Komplexe mit einer oder zwei Reaktivfunktionen CpSE^{II}(X) bzw. CpSE^{III}(X)₂ zu untersuchen. Da in der Literatur relativ wenig über Mono-Cp- im Vergleich zu Bis-Cp-Systemen bekannt ist, lässt sich bereits erkennen, dass die Synthese solcher Spezies mit Schwierigkeiten verbunden ist. Gerade wenn ein sterisch wenig anspruchsvoller Cp-Rest eingeführt werden soll, kommt es bei der Ligandsubstitution immer wieder zur Bildung der thermodynamisch begünstigten Metallocene oder Tris-Cp-Komplexe. Zudem resultiert aus dem elektropositiveren Charakter des SE-Zentralatoms eine stärker ionische Bindung, sodass die Verbindung zu Ligandenaustauschreaktionen neigt (*ligand scrambling*).
Zwar zeigen die meisten neutralen Halbsandwich-Komplexe keine Aktivität in der Olefinpolymerisation, aber eine Überführung durch z.B. MAO oder Borane wie [B(C₆F₅)₃] oder Borate [Ph₃C][B(C₆F₅)₄] bzw. (Ph₂MeNH][B(C₆F₅)₄] zu einer kationischen aktiven Spezies führte mehrfach zur erfolgreichen Anwendung in der regio- und stereospezifischen Polymerisation von Olefinen oder auch in Copolymerisationen mit zyklischen und aromatischen Monomeren.

Eine erfolgreichere Weiterentwicklung ergab sich durch die Substitution eines Cyclopentadienyl-Restes in einem ansa-Metallocen durch einen anderen anionischen oder neutralen Donor D zu den sogenannten *Constrained-Geometry-*Komplexen*.* Im Gegensatz zu den Cp-Ringen, die als inerte stark abschirmende Liganden (*spectator ligands*) zur Komplexierung eines reaktiven Metallzentrums dienen, besitzt der Donor D eine vielschichtigere Funktion: Er kann in der Katalyse hemilabil sein und einer zeitweisen Dekomplexierung ohne Zersetzung des Katalysatorsystems unterliegen oder er kann flexibel 2, 4 oder 6 Elektronen in σ- und π-Bindungen zum Zentralatom beisteuern.

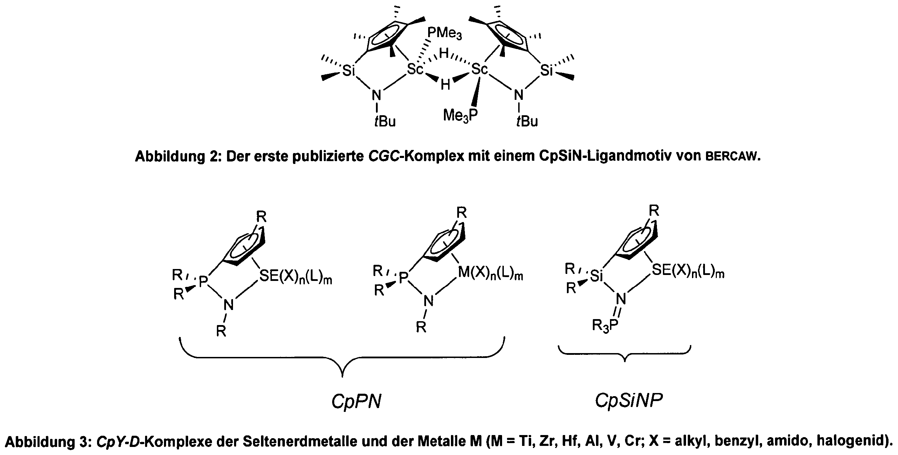

Der erste *Constrained-Geometry-*Komplex mit dem Cp-Y-D-Ligandmotiv wurde 1990 von BERCAW (P.J. Shapiro, E. Bunel, W. Schaefer, J.E. Bercaw, Organometallics 1990, 9, 867-869) in Form eines dimeren Sc-Hydrido-Komplexes mit der Chelateinheit *CpSiN* dargestellt (Abbildung 2).

Ansa-Cyclopentadienyl-Komplexe mit Seltenerdmetallen bilden neben den zahlreichen prominenten Gruppe 4-Verbindungen eine Klasse interessanter Homogenkatalysatoren, die auch im industriellen Maßstab Verwendung findet (EP 0416815A2).

Von Sundermeyer et al. wurden bereits einige neue Strukturmotive für *Constrained-Geometry-*Komplexe entwickelt. Sie enthalten eine chelatisierende Iminophosphoraneinheit mit einem stark basischen Stickstoffatom (Abbildung 3). Zunächst wurde auf der isoelektronischen Beziehung der dianionischen Einheit CpSiN des klassischen *CGC* zu der monoanionischen Einheit *CpPN* eine neue Serie an Liganden unterschiedlichen sterischen Anspruchs und elektronischer Donorcharakteristik dargestellt. Der erste Lutetiumskomplex des neuen Systems wurde 2005 veröffentlicht. Es konnte eine Serie an CpPN-Komplexen weiterer Seltenerdmetalle und Metallen der 3. und 4. Gruppe, in denen die *CpPN*-Einheit als Chelatligand fungiert, dargestellt und ihre Aktivität in der intramolekularen Hydroaminierung und in der Olefinpolymerisation untersucht werden (WO2009068000). Desweiteren wurden Versuche zur Synthese von Gruppe 4-, Aluminium-, Chrom-, Vanadium- und weiteren Seltenerdmetall-*CG*-Komplexen durchgeführt. Unabhängig aber zeitgleich wurden DFT Rechnungen und experimentelle Arbeiten zu fluorenylbasierten *FluPN-*Ligandensystemen und deren Komplexierung an Metalle der Gruppe 4 von BOURISSOU und Mitarbeitern veröffentlicht.

Wie schon erwähnt, ist in den *CpPN*-Komplexen die Phosphazen-Einheit direkt über das Phosphoratom an den C5-Ring gebunden, somit Bestandteil der strukturell belegbaren Chelateinheit. Ein Hybrid aus den neuartigen monoanionischen *CpPN-* und den klassischen dianionischen *CpSiN-*Liganden ist der monoanionische *CpSiNP*-Ligand, in dem die Phosphazeneinheit exozyklisch zu dem als Ziel anvisierten C5-Si-N-Chelatring steht. Verwandt zu dem 2010 erstmalig beschriebenen Ligandensystem sind auch Verbindungen mit Me₂Si-verbrückten Cyclopentadienyl-Imidazolin-2-imin-Liganden, deren N-Atome ebenfalls Bestandteil eines extrem basischen, zwitterionisch aufgebauten Neutralliganden, nämlich eines Imidazolringes sind. *Constrained-Geometry-*Komplexe mit diesem Ligandensystem des Chroms (S. Randoll, P.G. Jones, M. Tamm, Organometallics 2008, 27, 3232-3239), der Seltenerdmetalle und der Erdalkalimetalle (T.K. Panda, C.G. Hrib, P.G. Jones, J. Jenter, P.W. Roesky, M. Tamm, Eur. J. Inorg. Chem. 2008, 4270-4279) wurden von der Arbeitsgruppe **TAMM** publiziert. Ein weiteres jedoch dianionisches *CpPN-*Ligandsystem der allgemeinen Schreibweise (Cp^{R}PRNR)²⁻ mit einem Phosphor(III)-Atom in der Brücke aus der Arbeitsgruppe **SUNDERMEYER** soll an dieser Stelle Erwähnung finden, da die entsprechenden Titan-Komplexe lineares, hochmolekulares Polyethylen mit hoher Aktivität produzieren (J. Sundermeyer et al. Eur. J. Inorg. Chem. 2002, 678-691; J. Organomet Chem. 2001, 640, 21-28)*.*

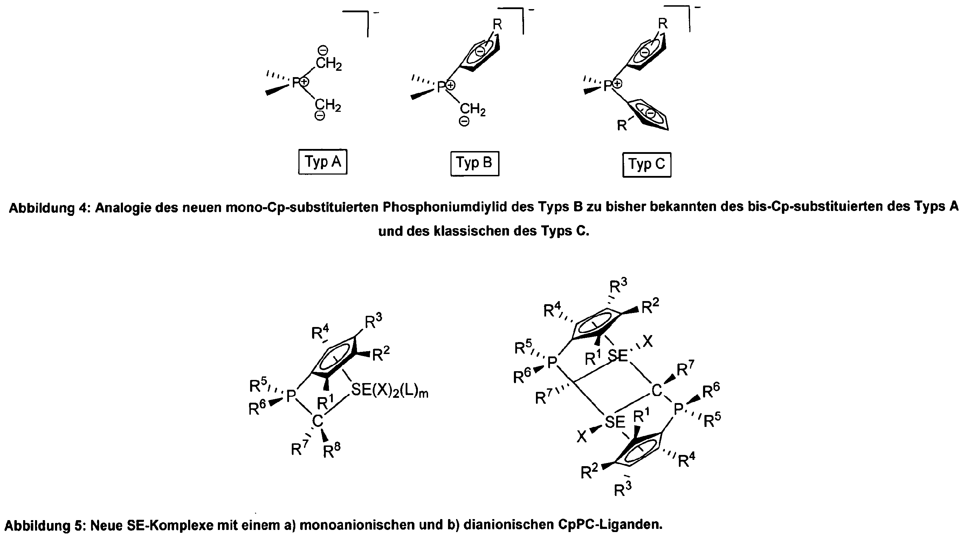

Bekannt sind weiterhin monoanionischen, bidendaten Phosphoniumdiylid-Liganden ("CPC", Typ A, Abbildung 4) aufzeigen. Komplexe dieses vielseitigen Chelat-Ligandensystems mit Metallen des gesamten Periodensystems wurden erforscht (H. Schmidbaur, Angew. Chem. lnt. Ed. 1983, 22, 907-927). In diesem Gebiet sollten im Besonderen die ersten homoleptischen, solvensfreien Organylkomplexe der Lanthanoide von **SCHUMANN** erwähnt werden. Diese Verbindungsklasse [(CPC)₃SE] mit KZ = 6 wird ausreichend durch Liganden mit zwei σ-Donoren des **Typs A** (Abbildung 4) für Lutetium bis hin zum größten der Lanthanoiden, Lanthan, stabilisiert (H. Schumann, F.-W. Reier, J. Organomet. Chem. 1982, 235, 287-294). Aufgrund dessen wurden ihre Charakterisierung und ihre Reaktivität eruiert. Neben homoleptischen Komplexen existieren auch, meist durch Cp-Coliganden stabilisierte, heteroleptische Komplexe der Seltenerden des **Typs A,** deren Reaktivitäten untersucht wurden.

Doch nicht nur die klassischen Phosphoniumdiylide haben das wissenschaftliche Interesse geweckt, sondern auch eine Reihe an phosphorverbrückten ansa-Metallocen-Liganden des **Typs C** (CpPCp) mit zwei π-Donoren in der Chelateinheit. Komplexe der Alkali- und Erdalkalimetalle, Metalle der Gruppe 4 und des Eisens wurden mit derartigen Bis-cyclopentadienyl-phosphoniumdiylid Liganden des **Typs C** dargestellt. Über ihre Reaktivität ist allerdings wenig bekannt. In einem Beispiel dient ein CpPCp-Eisen-Komplex selbst als Katalysator in der Polymerisationskatalyse (H. Schumann, S. Hohmann, Chemiker-Zeitung 1976, 100 (7-8), 336).

Obwohl Cyclopentadienylidenphosphorane des Typs R₃P=C₅R₄, deren Strukturmotiv der neuen Ligandenklasse des Typs B zugrunde liegt, schon lange als zwitterionische Liganden in der Literatur bekannt sind, wurde bisher nicht über den vorteilhaften Einsatz von Komplexen berichtet, die deprotonierte Formen dieses Liganden enthalten (F. Ramirez, S. Levy, J. Org. Chem. 1956, 21, 1333).

Weiterhin sind aus den Publikationen KONSTANTIN A. RUFANOV ET AL: "Svnthesis of (Indenvlidene) phosphoranes? A Novel Class ot Liqand Precursors for Main-Group and Transition Meta! Orqanometallics", EUROPEAN JOURNAL OF INORGANIC CHEMISTRY, Bd. 2004, Nr. 24, 1. Dezember 2004 (2004-12-01), Seiten 4759-4763, [0004] ALEX R. PETROV ET AL: "P-Amino-cyclopentadienylidene-phosphoranes versus P-cyclopentadienyl-iminophosphoranes-tautomeric protic forms of a new bidentate CpPN ligand system", DALTON TRANSACTIONS, Nr. 7, 1. Januar 2008 (2008-01-01 ), Seite und RUFANOV KONSTANTIN A ET AL: "A lutetium cyclopentadienylphosphazene constrained qeometrv complex (CGC) : First isolobalanaloques of group 4 cyclopentadienyl-silylamido CGC systems", EUROPEAN JOURNAL OF INORGANIC CHEMISTRY, WILEY-VCH VERLAG, WEINHEIM, OE, Nr. 19, 1. Januar 2005 (2005-01-01), Seiten 3805-3807 Phosphorane bekannt, die als Polvmerkatalvsatoren eingesetzt werden können.

Aufgabe dieser Erfindung ist es, SE-Komplexe bereitzustellen, die einen C₅R₄-Donor Donor über ein P-Brückenatom chelatartig an ein SE-Zentralatom gebunden besitzen.

Erfindungsgemäß wird die Aufgabe gelöst durch *η*⁵:*η*¹-CpPC-CGCe, der allgemeinen Formel 1 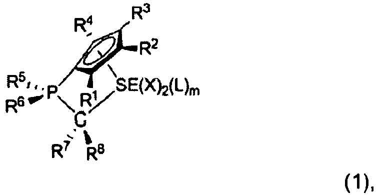 wobei
- SE =: Sc, Y, La, Ce, Pr, Nd, Pm, Sm, Eu, Gd, Tb, Dy, Ho, Er, Tm, Yb oder Lu;
- X =: unabhängig voneinander ein monoanionischer Diorganoamido-, Bistrimethylsilylamido-, Halogenido-, Alkyl-, Aryl-, Alkoxo-, Aryloxo- oder Alkylaluminat (AlR₄⁻)-Substituent;
- L =: Neutralligand wie Triorganylphosphane (PR₃), tertiäre Amine (NR₃), Pyridin und/oder Solvensmolekül wie Tetrahydrofuran(THF), Ether, N, N-Dimethylformamid (DMF), Dimethylsulfoxid (DMSO), Hexamethylphosphorsäuretriamid (HMPT), Tetrahydropyran (THP), Tetrahydrothiofuran (THT);
- R =: Alkyl mit bis 1 - 10 C-Atomen oder mono- oder polycyclisches Aryl mit 6 bis 20 C-Atomen
- R¹, R⁴ =: unabhängig voneinander H oder Methyl;
- R², R³ =: unabhängig voneinander H oder Methyl oder tertiär-Butyl oder gemeinsam ein substituierter Cycloalkylrest;
- R⁵, R⁶ =: Methyl, n-Butyl, tertiär-Butyl oder Phenyl;
- R⁷, R⁸ =: unabhängig voneinander H, Trimethylsilyl, Alkyl mit bis 1 - 10 C-Atomen oder mono- oder polycyclisches Aryl mit 6 bis 20 C-Atomen,

sowie
- m =: 0, 1, 2 oder 3 ist.

Alternativ dazu wird die erfindungsgemäße Aufgabe gelöst durch CpPC-CGC, der allgemeinen Formel 2 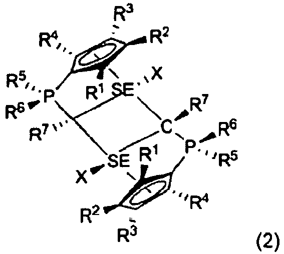 wobei
- SE =: Sc, Y, La, Ce, Pr, Nd, Pm, Sm, Eu, Gd, Tb, Dy, Ho, Er, Tm, Yb oder Lu;

- X =: unabhängig voneinander ein monoanionischer Diorganoamido-, Bistrimethylsilylamido-, Halogenido-, Alkyl-, Aryl-, Alkoxo-, Aryloxo- oder Alkylaluminat (AlR₄⁻)-Substituent;
- R =: Alkyl mit bis 1 - 10 C-Atomen oder mono- oder polycyclisches Aryl mit 6 bis 20 C-Atomen
- R¹, R⁴ =: unabhängig voneinander H oder Methyl;
- R², R³ =: unabhängig voneinander H oder Methyl oder tertiär-Butyl oder gemeinsam ein substituierter Cycloalkylrest;
- R⁵, R⁶ =: Methyl, n-Butyl, tertiär-Butyl oder Phenyl;
- R⁷ =: unabhängig voneinander H, Trimethylsilyl, Alkyl mit bis 1 - 10 C-Atomen oder mono- oder polycyclisches Aryl mit 6 bis 20 C-Atomen ist.

Vorzugsweise ist SE =Sc, Y, La, Ce, Nd, Sm oder Lu; X = Hexamethylendisilazanid. N, N - Dimethylbenzylamin (dmba) orthometalliert, N, N, α-Trimethylbenzylamin (tmba) orthometalliert, ein Silylmethanid -CH₂SiMe₃ oder -CH(SiMe₃)₂, Benzyl, Allyl, Cl, Br oder I in den *η*⁵:*η*¹-CpPC-CGC.

Die erfindungsgemäßen (*η*⁵:*η*¹-Phosphorylid)-Seltenerdmetalloce sind vorzugsweise ausgewählt aus der Gruppe bestehend aus:
[(*η*⁵:*η*¹-C₅Me₄PMe₂CH₂)Y(N(SiMe₃)₂)₂], [(*η*⁵:*η*¹-C₅Me₄PMe₂CH₂)Sm(N(SiMe₃)₂)₂],
[(*η*⁵:*η*¹-C₅Me₄PMe₂CH₂)Nd(N(SiMe₃)₂)₂], [(*η*⁵:*η*¹-C₅Me₄PMe₂CH₂)Ce(N(SiMe₃)₂)₂]
[(*η*⁵:*η*¹-C₅Me₄PMe₂CH₂)La(N(SiMe₃)₂)₂], [(*η*⁵:*η*¹-C₅H₃*t*BuPMe₂CH₂)Ce(N(SiMe₃)₂)₂],
[(*η*⁵:*η*¹-C₅H₃*t*BuPMe₂CH₂)La(N(SiMe₃)₂)₂], [(*η*⁵:*η*¹-C₅H₃*t*BuPMe₂CH₂)Nd(N(SiMe₃)₂)₂),
[(*η*⁵:*η*¹-C₅Me₄PMe₂CH₂)Nd(N(SiMe₂H)₂)₂], [(*η*⁵:*η*¹-C₅Me₄PPh₂CH₂)Y(CH₂SiMe₃)₂],
[(*η*⁵:*η*¹-C₅Me₄PPh₂CH₂)Sm(CH₂SiMe₃)₂], [(*η*⁵:*η*¹-C₅Me₄PPh₂CH₂)Sc(CH₂SiMe₃)₂],
[(*η*⁵:*η*¹-C₅H₃*t*BuPPh₂CH₂)Y(CH₂SiMe₃)₂], [(*η*⁵:*η*¹-C₅Me₄PMe₂CH₂)Sc(CH₂SiMe₂H)₂],
[(*η*⁵:*η*¹-C₅H₃*t*BuPMe₂CH₂)Sc(CH₂SiMe₃)₂].

In allen Komplexen stellt die CpPC-Einheit einen bidentaten, anionischen Liganden dar. Besonders bevorzugt wurden Komplexe mit R⁷, R⁸ = H hergestellt, die mit einer Methyleneinheit als 6+2-Elektronen-Donor [R¹⁻⁴₄C₅-PR⁵R⁶-CH₂]⁻ an das Seltenerdmetall koordinieren. Das dreiwertige SE-Metallatom ist zusätzlich durch weitere anionische Liganden X und Neutralliganden L koordiniert. Im speziellen Fall von R⁸ = H kann die CpPC-Einheit weiter deprotoniert werden und als ein bidentater, dianionischer 6+4-Elektronen-Ligand [R¹⁻⁴₄C₅-PR⁵R⁶-CR⁷]²⁻ an das Metallatom binden. Beansprucht werden sollen aber auch solche Komplexe, in denen mindestens einer dieser Liganden chelatartig an ein zwei- oder vierwertiges SE-Metallatom binden (Abbildung 5).

Die erfindungsgemäßen *η*⁵:*η*¹-CpPC-CGC werden in der Weise hergestellt, dass ein CH-acides Cyclopentadienylidenphosphoran mit einem Seltenenerdmetall-Ligandkomplex in einem aprotischen Lösemittel im Temperaturbereich von -20°C bis 120°C umgesetzt wird. Die Umsetzung erfolgt als Amineleminierung, Salzeleminierung oder Kohlenwasserstoffeleminierung. Vorzugsweise wird die Umsetzung in Aromaten, Kohlenwasserstoffen, Ethern oder in Gemischen aus diesen Lösemitteln vorgenommen. Besonders bevorzugt wird die Umsetzung im Temperaturbereich von -10°C bis 80°C vorgenommen. Das CH-acide Cyclopentadienylidenphosphoran wird vorzugsweise mit dem Seltenenerdmetall-Ligandenkomplex im Molverhältnis von 0,8 : 1 bis 1,2 : 1 umgesetzt. Besonders bevorzugt erfolgt die Umsetzung des CH-aciden Cyclopentadienylidenphosphorans mit dem Seltenenerdmetall-Ligandkomplex in äquimolaren Mengen.

Die erfindungsgemäßen *η*⁵:*η*¹-CpPC-CGCe werden als Reagenz oder Katalysator für organische Reaktionen verwendet. Weitere vorteilhafte Verwendungen sind die Verwendung als Katalysator für Ringöffnungspolymerisationen zur Herstellung von Polyestern und als Präkatalysator für die Polymerisation von Olefinen. Besonders vorteilhaft ist die Verwendung als Präkatalysator für die Polymerisation von konjugierten Olefinen.

Hervorzuhebende Vorteile der Metallocen- und Metallocenanalogen-Verbindungen im Vergleich zu den heterogenen ZIEGLER-NATTA-Katalysatorsystemen sind die gute Löslichkeit in unpolaren organischen Lösungsmitteln, die wohldefinierte katalytisch-aktive Stelle (*active side*) im Molekül (*single site catalyst*) und die durch die Stereochemie des Katalysatorskomplexes erzielbare Stereoselektivität der C-C-Knüpfungsreaktionen zum Polymer (Taktizität). Unterschiedliche Taktizitäten von Polyolefinen ergeben völlig unterschiedliche Eigenschaften wie z.B. Schmelzpunkt, Reißfestigkeit und Stabilität des Polymers, sodass durch das Design des molekularen Single-Site Katalysators gezielt das Eigenschaftsprofil für hochwertige Polymere eingestellt werden kann. Die neue Generation der *Constrained-Geometry*-Komplexe übertrifft die Aktivitäten von Metallocenen, ermöglicht eine hohe Selektivität in der Polymerisationskatalyse und ist thermisch deutlich belastbarer.

Die SE-Komplexe wurden erhalten durch Reaktionen von CH-aciden Ligand-Präkursoren mit SE-Amiden (Amineliminierung) oder mit SE-Alkylen (Kohlenwasserstoff-Eliminierung). Eine dritte Methode stellt die Umsetzung von Alkalisalzen der CpPC-Liganden mit SE-Halogeniden (Salzeliminierung) dar oder eine in-situ Kombination eines SE-Halogenids mit der protonierten Ligandform [CpPC]H und Organolithiumverbindungen oder Lithiumamiden als Base.

Die Erfindung wird nachfolgend an Hand von Beispielen näher erläutert, ohne das dadurch der Umfang der Erfindung eingeschränkt werden soll.

Alle Reaktionen mit hydrolyse- und/oder sauerstoffempfindlichen Substanzen wurden in ausgeheizten SCHLENK-Apparaturen unter Argon als Schutzgas durchgeführt. Es wurde eine Wechselhahnanlage mit einer Drehschiebervakuumpumpe (PFEIFFER, Modell Duo 010 M, Enddruck ca. 2·10⁻²bar) verwendet. Das Abwiegen der Substanzen, die Probenvorbereitung für analytische Untersuchungen und die Lagerung von hydrolyse- und/oder sauerstoffempfindlichen Substanzen wurde in einer Glovebox (Typ MB 150 BG-1, Fa. BRAUN, Lab Master 130, Fa. BRAUN) unter Stickstoffatmosphäre vorgenommen.

Die Lösungsmittel für luft- oder feuchtigkeitsempfindliche Reaktionen wurden nach Standardverfahren getrocknet und in Absorptionssäulen über Aluminiumoxid/Molsieb 3Å/R3-11G-Katalysator (Fa. BASF) aufbewahrt. Die deuterierten Lösungsmittel für NMR-Messungen wurden ebenfalls nach Standardmethoden getrocknet und über Molsieb 3 Å gelagert.
nBuLi (in Hexan), *t*BuLi (in Hexan), MeLi (in Et₂O), PhLi (*n*Bu₂O) und LiCH₂TMS wurden von der Firma **CHEMETALL** zur Verfügung gestellt. Die Konzentrationen der verwendeten Lösungen von Lithiumorganylen und **GRIGNARD-**Reagenzien wurden durch Titration mit *sec*Butanol gegen 1,10-Phenanthrolin als Indikator bestimmt.

Die NMR-Spektren wurden an folgenden Geräten bei RT gemessen:
BRUKER ARX 250: ¹H(250.1 MHz), ¹³C(62.5 MHz).
BRUKER ARX 300: ¹H(300.1 MHz), ¹³C(75.5 MHz), ³¹P(121.5 MHz).
BRUKER AMX 300: ¹H(300.1 MHz), ¹³C(75.5 MHz), ³¹P(121.5 MHz).
BRUKER DRX 400: ¹H(400.1 MHz), ¹³C(100.6 MHz), ³¹P(161.9 MHz), ⁷Li(155.44).
BRUKER DRX 500: ¹H(500.10 MHz), ¹³C(125.8 MHz), ³¹P(202.3 MHz), ²⁷Al(130.3 MHz).
Alle aufgeführten ³¹P-, und ¹³C-NMR Spektren sind ¹H-entkoppelt. Die NMR-Spektren wurden, mit Ausnahme der VT-NMR-Messungen, standardmäßig bei 298 K aufgenommen. Zur Kalibrierung der ¹H- und ¹³C-NMR-Spektren dienen die Restprotonen- und Lösungsmittelsignale der entsprechenden deuterierten Lösungsmittel.
¹H-NMR: C₆D₆: δ = 7.16 ppm, CDCl₃: δ = 7.24 ppm, d⁸-THF: δ = 3.58 ppm, 1.73 ppm, CD₃CN: δ = 1.94 ppm, CD₂Cl₂: δ = 5.32 ppm, d⁶-Toluol: δ = 7.09 ppm, d⁵-Pyridin: δ = 8.71 ppm, C₆D₅Br: δ = 7.15 ppm, d⁶-DMSO: δ = 2.50 ppm.
¹³C-NMR: C₆D₆: δ = 128.1 ppm, CDCl₃: δ = 77.0 ppm, d⁸-THF: δ = 49.0 ppm, 24.2 ppm, CD₃CN: δ =1.3 ppm, 118.3 ppm, CD₂Cl₂: δ = 52.79 ppm, d⁶-Toluol: δ = 137.5 ppm, d⁵-Pyridin: δ = 149.9 ppm, C₆D₅Br: δ = 131.8 ppm, d⁶-DMSO: δ = 39.5 ppm.
³¹P-NMR-Spektren wurden breitbandentkoppelt aufgenommen und extern gegen 85%ige Phosphorsäure oder mit Hilfe eines internen Standards (PPh₃ in C₆D₆: -5.26 ppm) kalibriert. Kopplungen zwischen Kern X und Kern Y mit Kernspin ½ über n Bindungen werden durch die Kopplungskonstante ⁿ*J*_{XY} in Hz angegeben.
Für die Multiplizität der Signale werden folgende Abkürzungen verwendet:
s = Singulett, d = Dublett, t = Triplett, q = Quartett, quin = Quintett, m = Multiplett.
Eine genaue Zuordnung der Signale erfolgte mittels 2D-NMR-Spektroskopie (COSY, NOESY-, HMQC- oder HSQC- und HMBC-NMR-Spektroskopie). In den NMR-Auswertungen wurde für den Cyclopentadienylring folgende Nummerierung verwendet.

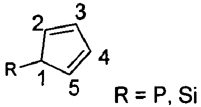

Infrarotspektren wurden entweder an einem NICOLET 510 M Spektrometer (als Nujolverreibungen zwischen KBr-Platten) oder an einem ATR-FT-IR-Spektrometer des Modells "Alpha-P" der Firma BRUKER (in Reinsubstanz) aufgenommen. Die Absorptionsbanden werden in cm⁻¹ angegeben. Die Charakteristik der Absorptionsbanden wird durch die folgenden Abkürzungen beschrieben: w = schwach, m = mittel, s = stark, *ṽ*= Wellenzahl / cm⁻¹.
Die Elementaranalysen (C, H, N) wurden von der analytischen Abteilung des Fachbereichs Chemie an einem Gerät des Typs CHN-Rapid der Firma HERAEUS durchgeführt. Hydrolyse- und/oder sauerstoffempfindlichen Substanzen wurden in der Glovebox in Zinntiegel eingewogen. Die Angaben erfolgen in Gewichtsprozent.

Die Einkristall-Röntgenstrukturmessungen wurden in der analytischen Abteilung des Fachbereichs Chemie der Philipps-Universität Marburg an einem IPDS-Gerät (IPDS-1. Fa. STOE) durchgeführt.. Bei Aufnahmen wurde ein Standardgraphitmonochromator (Mo-K_{α}-Strahlung, (λ = 71.073 pm) eingesetzt. Weitere Angaben zu den Kristallstrukturanalysen befinden sich im kristallographischen Anhang. Für die Abbildungen der Molekülstrukturen wurde das Programm DIAMOND 3 verwendet.

Die TGA wurde mit einem Gerät vom Typ TGA/SDTA 851 (Fa. METTLER TOLEDO) durchgeführt. Für die TGA-Messungen wurde die Probe jeweils mittels der im Gerät integrierten Ultra-Mikro-Waage in einen 70 µL-Aluminiumoxidtiegel eingewogen. Die DSC-Messungen der Polymerproben wurde an einem Gerät der Firma METTLER TOLEDO des Typs DSC 821e durchgeführt. Für die DSC-Messungen wurde die Substanz jeweils in einen 40 µL-Aluminiumtiegel eingewogen. In den Deckel des verschlossenen Tiegels wurde ein Loch gestochen, damit die eingeschlossene Luft entweichen konnte. Es wurde ein Temperaturprogramm mit zwei Zyklen verwendet. Die Proben wurden in einem Temperaturbereich von -90 bis 60°C bei Heizraten von 10 K/min gemessen.

Molekulargewichte konnten durch Gelpermeations-Chromatographie relativ zu Polystryrol als Standard in THF bei 20°C bestimmt werden.
Zunächst muss erwähnt werden, dass die GPC-Messung des Polyisoprens in reinem THF erfolgte, während für die Messung des Polycaprolactons Trifluoressigsäure in einer Konzentration von 5% zu THF als Eluenten zugesetzt wurden. Durch den Zusatz der Säure konnte eine evt. Kristallisation von Katalysatorresten unterdrückt werden. Messungen der gleichen Polymere auf denselben Säulen jedoch ohne Säurezusatz lieferten aufgrund von Überdruckbildung auf der Säule und Material keine aussagekräftigen Ergebnisse. Bei den Trennsäulen für Polycaprolacton handelt es sich um zwei PSS SDV linear Säulen (10 µ, 2x 8x600 mm) mit einer Flussrate von 0.8 mL/min. Bei der Trennsäule für die Messungen der Polyisoprenproben handelte es sich um eine PSS SDV linear Säule (5 µ, 30 cm) (+Vorsäule (SDV Vorsäule 5µ)) und eine Flussrate von 1 mL/min.

### Darstellung von [(η⁵:η¹-C₅R²₃R¹PR³₂CH₂)SE(hmds)₂]

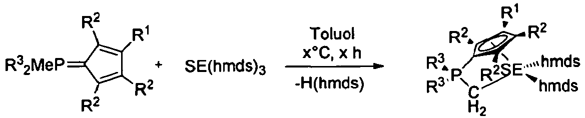

Allgemeine Vorschrift: In x ml Toluol wurden zunächst x mmol Ligand (1.0 eq) und x mmol SE(hmds)₃ (1.0 eq) gelöst. Die Reaktionslösung wird je nach Zentralatom unterschiedlich lang bei 80°C gerührt. Eine Reaktionskontrolle erfolgt mittels ³¹P-NMR-Spektroskopie. Nach der individuellen Reaktionszeit wird das Lösungsmittel und entstehendes Disilazan [H(hmds)] im Vakuum entfernt. Der Rückstand wird in 3-5mL Hexan suspendiert und gegebenenfalls im Ultraschallbad aufgeschlämmt. Zur Erhöhung der Ausbeute der Fällung wird die Suspension über Nacht bei -30°C gelagert.

### Beispiel 1: Darstellung von [(η⁵:η¹-C₅Me₄PPh₂CH₂)YCl₂]₂

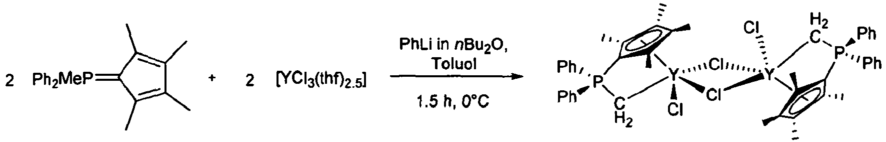

97 mg C₅Me₄PPh₂Me (0.30 mmol, 1.00 eq) und 134 mg [Ycl₃(thf)_{2.5}] (0.357 mmol, 1.18 eq) wurden vorgelegt und in 8 mL Toluol suspendiert. Die orange Lösung mit hellem Feststoff wurde auf 0°C gekühlt, tropfenweise mit 0.6 mL der PhLi-Lösung (0.5 M in *n*Bu₂O/Benzol, 0.30 mmol, 1.00 eq) versetzt und 1 h bei 0°C gerührt. Dabei entfärbte sich die Lösung.
Nach vollständiger Umsetzung (Reaktionskontrolle per ³¹P-NMR-Spektroskopie) wurde das Reaktionsgemisch über CELITE^{®} filtriert, es wurde zweimal mit je 3-4 mL Toluol gewaschen. Das erhaltene Filtrat wurde im Feinvakuum eingeengt, und der Rückstand wurde in Pentan suspendiert.

Das Gemisch wurde zentrifugiert, die überstehende Lösung wurde verworfen und der beige Feststoff im Feinvakuum getrocknet.
Ausbeute: 129 mg (0.24 mmol, 79%).
Eine Reaktionsführung in THP als Lösungsmittel und die Verwendung von [Ycl₃(thp)₂] liefert das gleiche Ergebnis.

### Beispiel 2: Darstellung von [(η⁵:η¹-C₅Me₄Pme₂CH₂)La(hmds)₂]

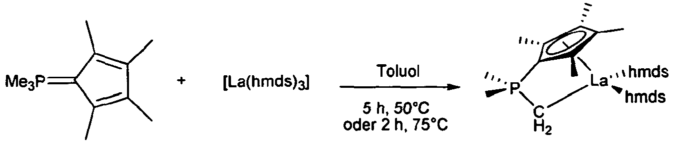

In 10 mL Toluol werden zunächst70 mg C₅Me₄Pme₃ (0.36 mmol, 1.00 eq) und 229 mg [La(hmds)₃] (0.37 mmol, 1.03 eq) gelöst. Die Reaktionslösung 2 h bei 75°C gerührt. Eine Reaktionskontrolle erfolgt mittels ³¹P-NMR-Spektroskopie. Bei 40°C wird das Lösungsmittel und H(hmds) im Feinvakuum entfernt. Der Rückstand wird in 3-5 mL Hexan suspendiert im Ultraschallbad aufgeschlämmt. Zur Erhöhung der Ausbeute wird die Suspension über Nacht bei -30°C gelagert. Ausbeute: 227 mg (0.35 mmol, 96%); Produkt: farbloser Feststoff.
Einkristalle konnten aus einer Hexanlösung bei -30°C erhalten werden.

### Beispiel 3: Darstellung von [η⁵:η¹-C₅Me₄PPh₂CH₂)Sm(CH₂SiMe₃)₂] und [(η⁵:η¹-C₅Me₄PPh₂CH)Sm(CH₂SiMe₃)]₂ im NMR-Maßstab

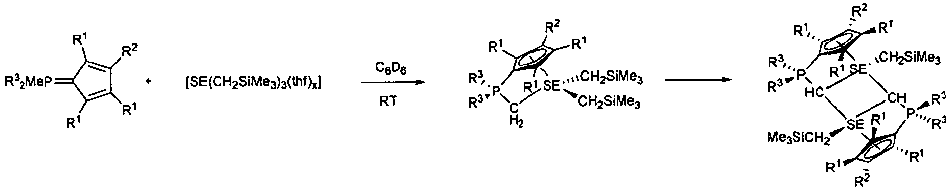

In 0.2 mL C₆D₆ werden zunächst 11.18 mg C₅Me₄PPh₂Me (0.04 mmol, 1.00 eq) in einem kleinen Gefäß in der Glovebox gelöst. In einem separaten Gefäß werden [Sm(CH₂SiMe₃)₃(thf)₃] (0.04 mmol, 1.00 eq) in 0.2 mL C₆D₆ gelöst. Die Ligandlösung wird langsam mit einer Spritze zur Präkursorlösung getropft, dabei wird das Reaktionsgefäß leicht geschwenkt. Die Reaktionsmischung wird in ein NMR-Röhrchen überführt, und es wird mit 0.2 mL C₆D₆ nachgespült. Die Verbindungen werden NMR-spektroskopisch charakterisiert.

### Beispiel 4: Darstellung von [(η⁵:η¹-C₅Me₄Pme₂CH₂)Y(hmds)₂]

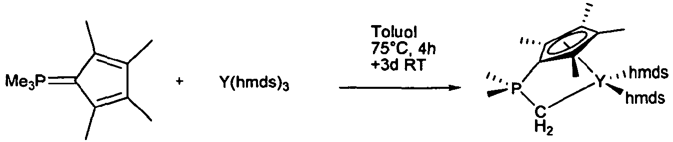

**Mengenangabe:** 10 ml Toluol, 70 mg Me₃PC₅Me₄ (0.36 mmol, 1.0 eq), 205 mg Y(hmds)₃ (0.36 mmol, 1.0 eq); Zeit: 5h (+3d); Temperatur: 50°C (+3d, RT).
Ausbeute: 163 mg (0.27 mmol, 75%); Farbe: farbloser Feststoff.
**Elementaranalyse** (C₂₄H₅₆N₂Psi₄Y, 604.94 g/mol): berechnet: C: 47.65, H: 9.33, N: 4.63; gefunden: C: 45.20, H: 8.91, N: 3.77.
**³¹P-NMR** (121.5 MHz, C₆D₆): δ/ppm = 3.17 (d, ²*J*_{P,Y} = 2.08 Hz).
**¹H-NMR** (400.1 MHz, C₆D₆): δ/ppm = 2.04 (s, 6H, C₅Me₄, 2,5-Cp), 2.00 (s, 6H, C₅Me₄, 3,4-Cp), 1.13 (d, ²*J*_{P,H} = 12.65 Hz, 6H, Pme₂), 0.42 (s, 36H, N(SiMe₃)₂), 0.02 (dd, 2H, ²*J*_{P,H} = 9.80 Hz, ²*J*_{Y,H} = 2.08 Hz, PCH₂Y).
**¹³C-NMR** (62.8 MHz, C₆D₆): δ/ppm = 125.4 (d, ^{2,3}*J*_{C,P} = 13.2 Hz), 119.3 (d, ^{2,3}*J*_{C,P} = 12.1 Hz), 91.2 (d, ¹*J*_{C,P} = 100.13 Hz, PC_{Cp}), 17.4 (d, ¹*J*_{C,P} = 48.3 Hz, Pme₂), 14.9 (s, C₅Me₄, 3,4-Cp), 12.3 (d, ³*J*_{C,P} = 1.44 Hz, C₅Me₄, 2,5-Cp), 6.62 (s, N(SiMe₃)₂), Das Signal für PCH₂Y ist von Signalen überlagert. **EI-MS:** m/z (%) = 355 (35%), 281 (100%), 254 (48%), 239 (39%), 207 (45%), 123 (100%), 105 (56%), 91 (34%), 77 (27%).
**IR** (Reinsubstanz): *ṽ*/*cm*⁻¹=2945.47 (m), 2896.22 (m), 1312.51 (m), 1291.25 (m), 1239.93 (s), 1125.00 (w), 951.37 (s), 929.76 (s), 812.79 (s), 770.03 (s), 751.79 (s), 661.53 (m), 607.43 (m), 450.22 (m).

### Beispiel 5: Darstellung von [(η⁵:η¹-C₅Me₄Pme₂CH₂)La(hmds)₂]

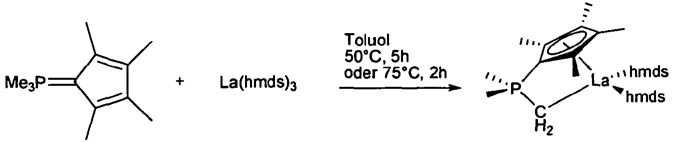

Mengenangabe: 10 ml Toluol, 70 mg Me₃PC₅Me₄ (0.36 mmol), 229 mg La(hmds)₃ (0.37 mmol, 1.03 eq); Zeit: 2h (5h); Temperatur: 75°C (50°C).
Ausbeute: 227 mg (0.35 mmol, 96%); Farbe: farbloser Feststoff.
Einkristalle können aus einer Hexanlösung bei -30°C erhalten werden.
**Elementaranalyse** (C₂₄H₅₆N₂Psi₄La, 654.94 g/mol): berechnet: C: 42.29, H: 8.07, N: 4.48; gefunden: C: 38.61, H: 7.73, N: 3.58.
**¹H-NMR** (300.1 MHz, C₆D₆): δ/ppm = 2.08 (s, 6H, C₅Me₄, 2,5-Cp), 2.04 (s, 6H, C₅Me₄), 1.13 (d, ²*J*_{P,H} = 12.8 Hz, 6H, Pme₂), 0.40 (s, 36H, N(SiMe₃)₂), -0.26 (d, 2H, ²*J*_{P,H} = 7.74 Hz, PCH₂La).
**¹³C-NMR** (75.5 MHz, C₆D₆): *δ*/ppm = 127.5 (d, ¹*J*_{P,C} = 57.2 Hz, C_{q}P), 124.28 (s, C₅Me₄), 120.46 (s, C₅Me₄, 2,5-Cp), 13.19 (s, C₅Me₄), 10.70 (s, C₅Me₄, 2,5-Cp), 17.18 (d, ¹*J*_{P,C} = 48.0 Hz, Pme₂), 4.17 (s, N(SiMe₃)₂), 1.68 (d, ¹*J*_{P,C} = 69.9 Hz, PCH₂La).
**³¹P-NMR** (121.5 MHz, C₆D₆): *δ*/ppm = 4.99.
**³¹P-NMR** (121.5 MHz, Et₂O): *δ*/ppm = 6.75.
**EI-MS:** m/z (%) = 161 [hmds], 146 [Me₃Si-N-SiMe₂].
**IR** (Reinsubstanz): *ṽ*/*cm*⁻¹= 2994.48 (m), 2888.58 (w), 1248.65 (m), 1235.29 (m), 1099.08 (w), 1045.19 (w), 1007.16 (s), 892.52 (m), 819.00 (s), 750.03 (w), 743.17 (m), 688.25 (w), 658.17 (s), 597.40 (m), 438.40 (s).

### Beispiel 6: Darstellung von [(η⁵:η¹-C₅Me₄Pme₂CH₂)Ce(hmds)₂]

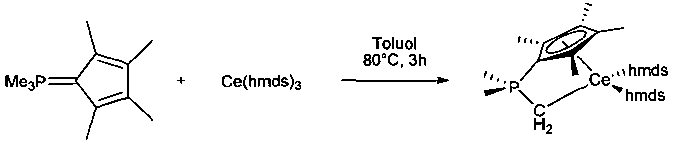

Mengenangabe: 8 ml Toluol, 86 mg Me₃PC₅Me₄ (0.44 mmol, 1.0 eq), 273 mg Ce(hmds)₃ (0.44 mmol, 1.0 eq); Zeit: 3h; Temperatur: 80°C, die Verbindung ist stark oxidationsempfindlich. Ausbeute: 137.5 mg (0.21 mmol, 47.7%); Farbe: hellbrauner Feststoff.
Einkristalle können aus einer Hexanlösung bei -30°C erhalten werden.

**Elementaranalyse** (C₂₄H₅₆N₂Psi₄Ce, 656.15 g/mol): berechnet: C: 43.93, H: 8.60, N: 4.27; gefunden: C: 28.50, H: 5.26, N: 0.89.
**¹H-NMR** (300.1 MHz, C₆D₆): *δ*/ppm = 4.36 (s, 6H, C₅Me₄), 3.70 (s, 6H, C₅Me₄), 2.38 (bs, 6H, Pme₂), 0.13 (s, 36H, N(SiMe₃)₂), -2.71 (bs, PCH₂Ce).
**³¹P-NMR** (121.5 MHz, C₆D₆): *δ*/ppm = -32.3.
**¹³C-NMR** (75.5 MHz, C₆D₆): Signale verschwinden im Grundrauschen aufgrund des Paramagnetismus.
**EI-MS:** m/z (%) = 161 [hmds]⁺, 146 [Me₃Si-N-SiMe₂]⁺.

IR (Reinsubstanz): *ṽlcm*⁻¹= 2949.64 (m), 2900.61 (w), 1240.32 (m), 997.91 (m), 967.72 (s), 948.33 (m), 860.47 (m), 825.12 (s), 801.88 (s), 737.84 (s), 660.62 (m), 591.05 (m), 450.45 (w).

### Beispiel 7: Darstellung von [(η⁵:η¹-C₅Me₄Pme₂CH₂)Nd(hmds)₂]

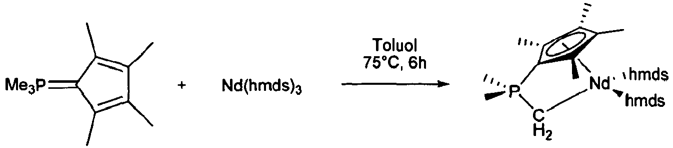

Mengenangabe: 5 ml Toluol, 96 mg Me₃PC₅Me₄ (0.49 mmol, 1.00 eq), 320 mg Nd(hmds)₃ (0.51 mmol, 1.04 eq); Zeit: 6h; Temperatur: 75°C (+3d RT).
Ausbeute: 211.3 mg (0.32 mmol, 65.3%); Farbe: blauer Feststoff.
Dunkelblaue Einkristalle konnten aus einer Hexanlösung bei -20°C nach 2d erhalten werden. **Elementaranalyse** (C₂₄H₅₆N₂Psi₄Nd; 657.23 g/mol): berechnet: C: 43.66, H: 8.55, N: 4.24; gefunden: C: 39.21, H: 8.08, N: 3.48.
**³¹P-NMR** (121.5 MHz, C₆D₆): *δ*/ppm = -200.7 (bs).
**¹H-NMR** (400.1 MHz, C₆D₆): δ/ppm = 12.88 (s, 6H, C₅Me₄), 5.16 (s, 6H, C₅Me₄), -0.75 (bs, 6H, Pme₂), -5.10 (bs, 18H, N(SiMe₃)₂), -7.58 (bs, 18H, N(SiMe₃)₂), -69.8 oder -16.38 (bs, 2H, PCH₂Nd). **¹³C-NMR** (100.6 MHz, C₆D₆): δ/ppm = 210.2 (s, C₅Me₄), 180.2 (s, C₅Me₄), 168.6 (d, ¹*J*_{P,C} = 95.6 Hz, PC_{Cp}), 68.3 (bs, C₅Me₄), 34.0 (d, ¹*J*_{P,C} = 47.3 Hz, Pme₂), 24.9 (C₅Me₄), 6.41(N(SiMe₃)₂), 1.18, -13.27 (N(SiMe₃)₂).
Das Signal für PCH₂Nd konnte nicht identifiziert werden.
IR (Reinsubstanz): *ṽlcm*⁻¹ = 2946.89 (m), 2895.13 (w), 1239.15 (m), 963.29 (s), 945.74 (s), 814.66 (s), 766.15 (s), 747.21 (s), 659.85 (s), 598.84 (s), 438.86 (m).

### Beispiel 8: Darstellung von [(η⁵:η¹-C₅Me₄Pme₂CH₂)Sm(hmds)₂]

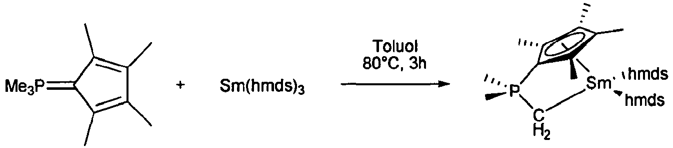

Mengenangabe: 10 ml Toluol, 49 mg Me₃PC₅Me₄ (0.25 mmol, 1.0 eq), 158 mg Sm(hmds)₃ (0.25 mmol, 1.0 eq); Zeit: 3h; Temperatur: 80°C.
Ausbeute: 98 mg (0.147 mmol, 58.8%); Farbe: beiger Feststoff.
**Elementaranalyse** (C₂₄H₅₆N₂Psi₄Sm, 667.25 g/mol): berechnet: C: 43.26, H: 8.47, N: 4.20; gefunden: C: 41.73, H: 8.76, N: 3.92.
**³¹P-NMR** (121.5 MHz, Toluol): *δ*/ppm = 37.9 (bs).
**¹H-NMR** (300.1 MHz, C₆D₆): *δ*/ppm = 3.21 (s, 6H, C₅Me₄), 2.29 (s, 6H, C₅Me₄), -0.05 (bs, 6H, Pme₂), -1.57 (s, 36H, N(SiMe₃)₂), -3.86 (bs, 2H, PCH₂Sm).
**¹³C-NMR** (75.5 MHz, C₆D₆): Signale lassen sich nicht identifizieren.
**EI-MS:** m/z (%) = 652.2 [M⁺-Me].
**IR** (Reinsubstanz): *ṽ*/*cm*⁻¹=3067.14 (bm), 2949.59 (w), 1240.45 (m), 998.29 (m), 968.28 (s), 948.34 (m), 860 (m), 825.51 (s), 801.91 (s), 737.98 (s), 660.75 (s), 591.22 (s), 450.30 (m), 405 (m).

### Beispiel 9: Darstellung von [(η⁵:η¹-C₅H₃tBuPMe₂CH₂)La(hmds)₂]

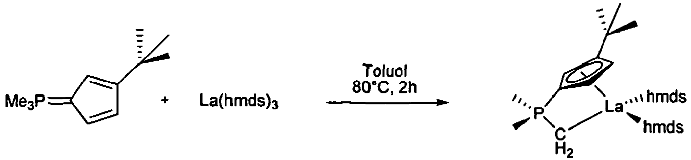

Mengenangabe: 10ml Toluol, 98.0 mg Me₃PC₅Me₄ (0.50 mmol, 1.00 eq), 415 mg La(hmds)₃ (0.67 mmol, 1.34 eq); Zeit: 2h; Temperatur: 80°C.
Ausbeute: 194 mg (0.30 mmol, 60%); Farbe: beiger Feststoff.
Farblose Einkristalle konnten aus einer Hexanlösung bei -30°C erhalten werden. **Elementaranalyse** (C₂₄H₅₆PlaN₂Si₄, 652.0 g/mol): berechnet: C: 44.01, H: 8.62, N: 4.28; gefunden: C: 32.17, H: 6.48, N: 1.41.
**¹H-NMR** (C₆D₆, 400.15 MHz): *δ*/ppm = 6.65 (m, 1 H, C₅H₃), 6.28 (m, 1 H, C₅H₃), 5.91 (m, 1 H, C₅H₃), 1.43 (s, 9H, *t*Bu), 1.08 (d, ²*J*_{H,P} = 13.1 Hz, 3H, Pme), 1.03 (d, ²*J*_{H,P} = 12.8 Hz, 3H, Pme), 0.45 (bs, 18H, (N(SiMe₃)₂), 0.33 (s, 18H, (N(SiMe₃)₂), -0.58 (dd, ²*J*_{H,P} = 8.2 Hz, ²*J*_{H,H} = 3.6 Hz, 2H, PCH₂La). **³¹P-NMR** (C₆D₆, 161.90 MHz): *δ*/ppm = 7.21.
**¹³C-NMR** (75.5 MHz, C₆D₆): δ/ppm = 147.1 (d, ²*J*_{CP} = 11.3 Hz, C₅H₃*t*Bu, C_{q}*t*Bu), 113.8 (d, ²*J*_{CP} = 13.6 Hz, C₅H₃*t*Bu), 112.2 (d, ²*J*_{CP} = 12.8 Hz, C₅H₃*t*Bu), 109.7 (d, ³*J*_{CP} = 12.8 Hz, C₅H₃*t*Bu), 94.3 (d, ¹*J*_{CP} = 104.7 Hz, PC_{Cp}), 33.6 (s, C(CH₃)₃), 32.4 (d, C(CH₃)₃), 15.3 (d, ¹*J*_{CP} = 47.5 Hz, Pme), 12.8 (d, ¹*J*_{CP} = 53.5 Hz, Pme), 7.95 (d, ¹*J*_{CP} = 38.42 Hz, PCH₂La), 4.4 (bs, (N(SiMe₃)₂, 24.3 (s, (N(SiMe₃)₂.
**EI-MS:** m/z = 196 [Me₃PC₅H₃*t*Bu], 181[Me₂PC₅H₃*t*Bu], 61 [Me₂P].
**IR** (Reinsubstanz): *ṽ*/*cm*⁻¹ = 3066.61 (w), 2946.81 (m), 2899.33 (w), 1460.77 (w), 1414.74 (m), 1357.36 (w), 1291.67 (s), 1241.43(s), 1201.91 (s), 1176.04 (s), 1091.89 (s), 1056.23 (m), 1004.24 (s), 975.35 (vs), 747.93 (vs), 9.8067 (w), 861.32 (s), 824.38 (m), 801.99 (m), 765.70 (s), 744.09 (m), 663.42 (vs), 589.99(vs), 488.12(w), 449.73(w).

### Beispiel 10: Darstellung von [(η⁵:η¹-C₅H₃tBuPMe₂CH₂)Ce(hmds)₂]

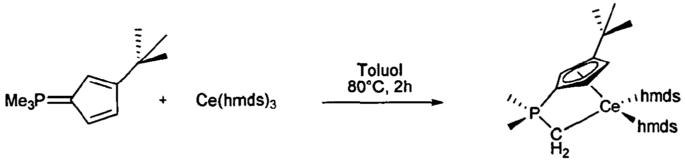

Mengenangabe: 10ml Toluol, 98.0 mg Me₃PC₅Me₄ (0.51 mmol, 1.00 eq), 380 mg Ce(hmds)₃ (0.61 mmol, 1.19 eq); Zeit: 2h; Temperatur: 80°C.
Ausbeute: 144 mg (0.22 mmol, 43%); Farbe: brauner Feststoff.
Gelbe Einkristalle konnten aus einer Hexanlösung bei -18°C erhalten werden.
**Elementaranalyse** (C₂₄H₅₆PceN₂Si₄, 653.2 g/mol): berechnet: C: 43.93, H: 8.60, N: 4.27; gefunden: C: 39.43, H: 7.97, N: 2.96.
**¹H-NMR** (300.1 MHz, C₆D₆): *δ*/ppm = 46.27 (s, 1H, C₅H₃*t*Bu), 18.05 (s, 1H, C₅H₃*t*Bu), 15.06 (s, 3H), 5.27 (s, 9H, C₅H₃*t*Bu), -0.81 (sehr breites Signal lässt sich nicht intergrieren N(SiMe₃)), -4.43 (s, 3H), -9.85 (bs, 1H, C₅H₃*t*Bu), -11.55 (sehr breites Signal lässt sich nicht intergrieren N(SiMe₃)₂), -25.80 (s, 1 H, C₅H₃*t*Bu), -35.82 (bs, 2H, PCH₂Ce). 2D-Spektren von dieser Verbindung konnten auch nach langer Messzeit keine aussagekräftigen Signale liefern.
**³¹P-NMR** (121.5 MHz, C₆D₆): *δ*/ppm = -27.8 (bs).
**EI-MS:** m/z(%) = 181 [Me₂P-Cp^{*t*Bu}], 196[Me₃P-Cp^{*t*Bu}], 61 [Me₂P].
**IR** (Reinsubstanz): *ṽlcm*⁻¹ = 3065.81 (w), 2946.36 (m), 2897.23 (m), 2858.60 (w), 1427.61 (m), 1355.52 (m), 1291.51 (m), 1200.65 (m), 1174.10 (s), 1091.93 (s), 1057.31 (s), 977.72 (m), 946.70 (vs), 860.54 (m), 825.67 (m), 764.56 (vs), 667.43 (vs), 608.64 (w), 488.04 (w), 450.21 (m).

### Beispiel 11: Darstellung von [(η⁵:η¹-C₅H₃tBuPMe₂CH₂)Nd(hmds)₂]

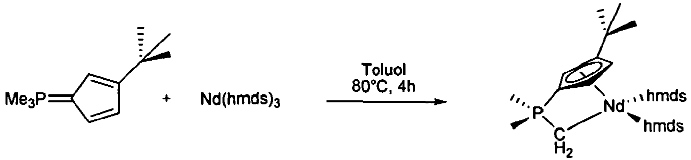

Mengenangabe: 10ml Toluol, 49 mg Me₃PC₅Me₄ (0.25 mmol, 1.00 eq), 163 mg Nd(hmds)₃ (0.26 mmol, 1.04 eq); Zeit: 4h; Temperatur: 80°C.
Ausbeute: 118.3 mg (0.18 mmol, 72%); Farbe: blauer, kristalliner Feststoff.
**Elementaranalyse** (C₂₄H₅₆N₂Psi₄Nd, 657.23 g/mol)
**³¹P-NMR** (121.5 MHz, C₆D₆) *δ*/ppm, = -178.5.
**¹H-NMR** (300.0 MHz, C₆D₆) *δ*/ppm
**IR** (Reinsubstanz): *ṽlcm*⁻¹ = 2945.93 (m), 2895.00 (w), 1239.31 (s), 965.02 (s), 945.84 (s), 823.47 (s), 766.02 (m), 746.05 (m), 659.71 (s), 598.92 (s), 440.34 (w).

### Beispiel 12: Darstellung von [(η⁵:η¹-C₅H₃tBuPPh₂CH₂)La(hmds)₂]

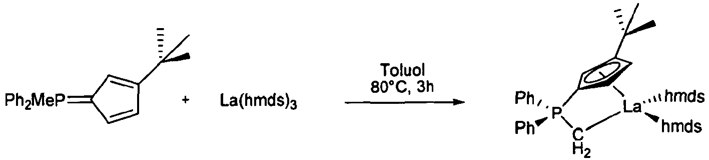

Mengenangabe: 8 ml Toluol, 80mg C₅H₃*t*BuPPh₂Me (0.25 mmol, 1.00 eq), 155 mg La(hmds)₃ (0.25 mmol, 1.00 eq); Zeit: 3h; Temperatur: 80°C.
Ausbeute: 115 mg (0.148 mmol, 59.1%); Farbe: beiger Feststoff.
**Elementaranalyse** (C₃₄H₆₀LaN₂Psi₄, 778.3 g/mol): berechnet: C, 52.42; H, 7.76; N, 3.60;
¹**H-NMR** (C₆D₆, 400.1 MHz): *δ*/ppm = 7.82-7.74 (m, 4H, Phₘ), 7.03-7.00 (m, 6H, Ph_{o,p}), 6.77 (m, 1H, C₅H₃), 6.40 (m, 1H, C₅H₃), 6.04 (m, 1H, C₅H₃), 1.39 (s, 9H, *t*Bu), 0.33 (bs, 18H, (N(SiMe₃)₂), 0.30 (bs, 2H, PCH₂La, überlagert von dem Signal für hmds), 0.27 (s, 18H, (N(SiMe₃)₂).
³¹**P-NMR** (C₆D₆, 121.90 MHz): *δ*/ppm = 12.6.
¹³**C-NMR** (75.5 MHz, C₆D₆): *δ*/ppm = 132.42 (s, Phₚ), 132.41 (s, Phₚ), 131.9 (d, ³*J*_{C,P} = 2.33 Hz, Phₘ), 131.7 (d, ³*J*_{C,P} = 2.12 Hz, Phₘ), 129.0 (d, ²*J*_{C,P} = 5.9 Hz, Phₒ), 131.7 (d, ²*J*_{C,P} = 5.9 Hz, Phₒ), 116.3 (d, ^{2,3}*J*_{CP} = 13.4 Hz, C₅H₃*t*Bu), 114.7 (d, ^{2,3}*J*_{CP} = 13.7 Hz, C₅H₃*t*Bu), 113.2 (d, ^{2,3}*J*_{CP} = 13.1 Hz, C₅H₃*t*Bu), 91.9 (m, PC_{Cp}), 32.7 (s, C(CH₃)₃), 4.5 (bs, (N(SiMe₃)₂, 3.5 (s, (N(SiMe₃)₂.
Die Signale des quartären Kohlenstoffatoms der *tert*-Butyl-Gruppe und der Methylenbrücke sind nicht zu beobachten.
**IR** (Reinsubstanz): *ν̃*/*cm*⁻¹ = 2949.77 (m), 2900.52 (m), 1240.51 (m), 997.76 (m), 967.78 (s), 948.38 (m), 860.62 (m), 825.20 (s), 801.99 (s), 764.14 (s), 738.03 (m), 660.67 (s), 591.07 (s), 450.52 (m).

### Beispiel 13: Darstellung von [(η⁵:η¹-C₅Me₄PPh₂CH₂)LaBr(hmds) (thf)

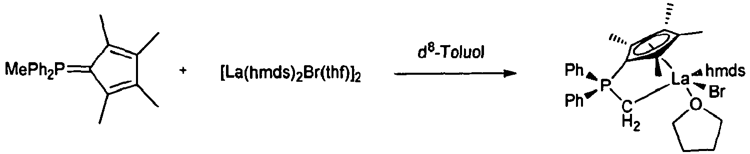

In ein NMR-Röhrchen wurden 16.0 mg (0.044 mmol, 1.05 eq) C₅Me₄PPh₂CH₃ und 25.5 mg (0.042 mmol, 1.00 eq) [La(hmds)₂Br(thf)]₂ zusammen eingewogen und in 0.7 mL d⁸-Tol gelöst. Die Reaktionslösung wird NMR-spektroskopisch untersucht.
Anschließend wird die Temperatur um 10°C erhöht und jeweils ein ³¹P-NMR- und ein ¹H-NMR-Spektrum gemessen.
³¹**P-NMR** (202.3 MHz, d³-Tol): δ/ppm = 14.4.
¹**H-NMR** (500.1 MHz, d⁸-Tol): δ/ppm = 7.89-6.99 (m, 10H, Ph), 3.58 (4 H, thf), 2.09 (s, 6H, C₅Me₄), 1.82 (s, 6H, C₅Me₄), 1.52 (4H, thf), 0.44 (d, 2H, ²*J*_{PH} = 6.0 Hz, PCH₂La), 0.08 (s, 18H, N(SiMe₃)₂).
**¹³C-NMR** (125.8 MHz, d⁸-Tol): *δ*/ppm = 133.1 (Ph), 133.0 (Ph), 131.4 (Ph), 14.1 (C₅Me₄), 11.9 (C₅Me₄), 2.66 (s, N(SiMe₃)₂), 1.39 (PCH₂La). Die Signale für die quartären Kohlenstoff-Atome des Cp-Ringes sind nicht sichtbar. Die Aufspaltungen der Signale der C-Atome des Phenylringes zu dem Phosphoratom sind aufgrund der Breite der Signale nicht klar definierbar.

### Beispiel 14: Darstellung von [(η⁵:η¹-C₅Me₄PMe₂CH₂)LaBr(hmds)(thf)]

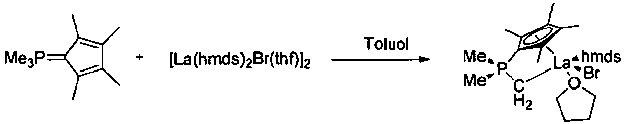

In ein NMR-Röhrchen wurden 5.95 mg (0.030 mmol, 1.00 eq) C₅Me₄PMe₃ und 20.61 mg (0.034 mmol, 1.13 eq) [La(hmds)₂Br(thf)]₂ zusammen eingewogen und in 10 mL Toluol gelöst. Die Reaktionslösung wird per ³¹P-NMR-NMR-Spektroskopie untersucht.
**³¹P-NMR** (121.5 MHz, C₆D₆): *δ*/ppm = 9.15.
**¹H-NMR** (300.1 MHz, C₆D₆): *δ*/ppm = 3.58 (thf), 2.08 (s, 6H, C₅Me₄), 2.04 (s, 6H, C₅Me₄), 1.31 (thf), 0.79 (d, 6H, ²*J*_{P,H} = 12.0 Hz, PMe₂), -0.27 (d, 2H, ²*J*_{P*,*H} = 9.0 Hz, PCH₂La), 0.40 (s, 18H, N(SiMe₃)₂).

### Beispiel 15: Darstellung von [η⁵:η¹-C₅Me₄PPh₂CH₂Y(CH₂SiMe₃)₂] via Eintopfreaktion

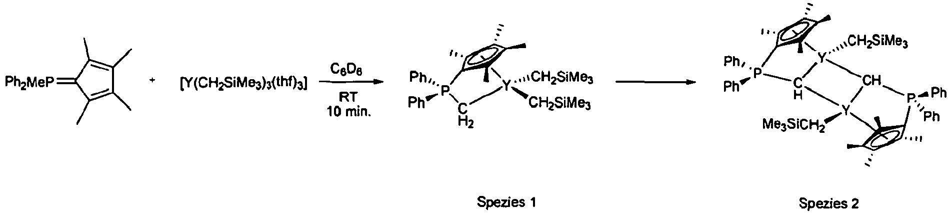

99 mg LiCH₂SiMe₃ (1.05 mmol, 3.51 eq) wurden in 4 mL Toluol gelöst, auf 0°C gekühlt und langsam zu einer ebenfalls auf 0°C gekühlten Suspension, von 133 mg [YCl₃thf_{2.5}] (0.354 mmol, 1.18 eq) und 96 mg C₅Me₄PPh₂Me (0.300 mmol, 1.00 eq) in 4 mL Toluol, getropft. Dabei fiel ein heller Niederschlag aus. Das Gemisch wurde 1h bei 0°C gerührt. Eine Reaktionskontrolle zeigte ein Haupt- und ein Nebenprodukt und teilweise freien Liganden. Das Gemisch wurde in einer Umkehrfritte, über Celite abfiltriert und das Lösungsmittel wurde im Vakuum vom Filtrat entfernt. Der Rückstand wurde in Pentan suspendiert. Nach Absetzen des Feststoffs zeigte das ³¹P-NMR-Spektrum des Überstandes, dass sich nun beide Spezies in Lösung im gleichen Verhältnis vorliegen. Aus der überstehenden Lösung konnte bei -30°C ein farbloser Kristall gezüchtet werden, der Spezies 2 identifizierte.
**³¹P-NMR** (121.5 MHz, Toluol): *δ*/ppm = 12.88 (d, ¹*J*_{P,Y} = 5.36 Hz, 86%, Spezies 1), 7.47 (d, ¹*J_{P,Y}* = 5.36 Hz, 9%, Spezies 2), 1.81 (m, 5%, Ligand).
**³¹P-NMR** (121.5 MHz, Pentan): ö/ppm = 13.84 (d, ¹*J*_{P,Y} = 5.36 Hz, 33%, Spezies 1), 8.40 (m, 33%, Spezies 2), 2.41 (m, 33%, Ligand).

### Beispiel 16: Ringöffnende Polymerisation von ε-Caprolacton mit CpPC-bis-hmds-Verbindungen

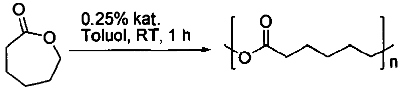

0.25 mmol des entsprechenden Liganden werden mit 0.25 mmol des entsprechenden SE(hmds)₃ in 10 mL Toluol für eine unten angegebene Zeit bei unten angegebener Temperatur gerührt. Mittels ³¹P-NMR-Spektroskopie wurde die vollständige Umsetzung des Liganden zum Komplex kontrolliert. Nun werden 1 mL (ca. 0.025 mmol Komplex, 1.00 eq) dieser Reaktionslösung in 50 mL Toluol gespritzt und 1.14 g (10 mmol, 400 eq) des ε-Caprolactons hinzugespritzt. Es wurde 1 h bei RT gerührt. Anschließend wurde die Lösung in 900 mL MeOH (versetzt mit 0.1 mL HCl_{konz}) gegeben. Es fällt sofort ein weißer Feststoff aus und die Lösung trübt sich. Es wurde über Nacht gerührt um eine vollständige Fällung zu gewährleisten. Am nächsten Tag wurde das Polymer über einem BÜCHNER-Trichter abfiltriert und bei 40°C im Vakuum zwei Tage getrocknet.
Das Polymer wurde in ca. 50-100 mL CHCl₃ gelöst, über Celite filtriert (um evt. SE₂O₃ abzutrennen) und erneut in 500 mL MeOH ausgefällt. Das Polymer wurde zwei weitere Male gelöst und wieder ausgefällt um eine hohe Reinheit für analytische Zwecke zu gewährleisten.
Das Polymer wurde mittels GPC und NMR-Spektroskopie analysiert.

| Katalysator | t/min | Ausbeute | M_{w}/g/mol | PD |
|---|---|---|---|---|
| [(*η*⁵:*η*¹-C₅Me₄PMe₂CH₂)Y(N(SiMe₃)₂)₂] | 60 | 80% | 204.282 | 2.37 |
| [(*η*⁵:*η*¹-C₅Me₄PMe₂CH₂)Sm(N(SiMe₃)₂)₂] | 60 | 81% | 80.408 | 1.99 |
| [(*η*⁵:*η*¹-C₅Me₄PMe₂CH₂)Nd(N(SiMe₃)₂)₂] | 60 | 60% | 225.549 | 4.13 |
| [(*η*⁵:*η*¹-C₅Me₄PMe₂CH₂)Ce(N(SiMe₃)₂)₂] | 60 | 28% | 86.171 | 2.67 |
| [(*η*⁵:*η*¹-C₅Me₄PMe₂CH₂)La(N(SiMe₃)₂)₂] | 60 | 99% | 255.060 | 1.97 |
| | | | | |
| [(*η*⁵:*η*¹-C₅H₃*t*BuPMe₂CH₂)Ce(N(SiMe₃)₂)₂] | 60 | 78% | 22.000 | 1.57 |
| [(*η*⁵:*η*¹-C₅H₃*t*BuPMe₂CH₂)La(N(SiMe₃)₂)₂] | 60 | 45% | 300.380 | 3.55 |
| [(*η*⁵:*η*¹-C₅H₃*t*BuPMe₂CH₂)Nd(N(SiMe₃)₂)₂] | 60 | 95% | 213.040 | 1.88 |
| | | | | |
| [(*η*⁵:*η*¹-C₅Me₄PMe₂CH₂)Nd(N(SiMe₂)₂)₂] | 60 | 75% | 189.825 | 2.31 |

| | | | | |
|---|---|---|---|---|
| Legende: N(SiMe₃)₂ steht für das Anion hmds | | | | |

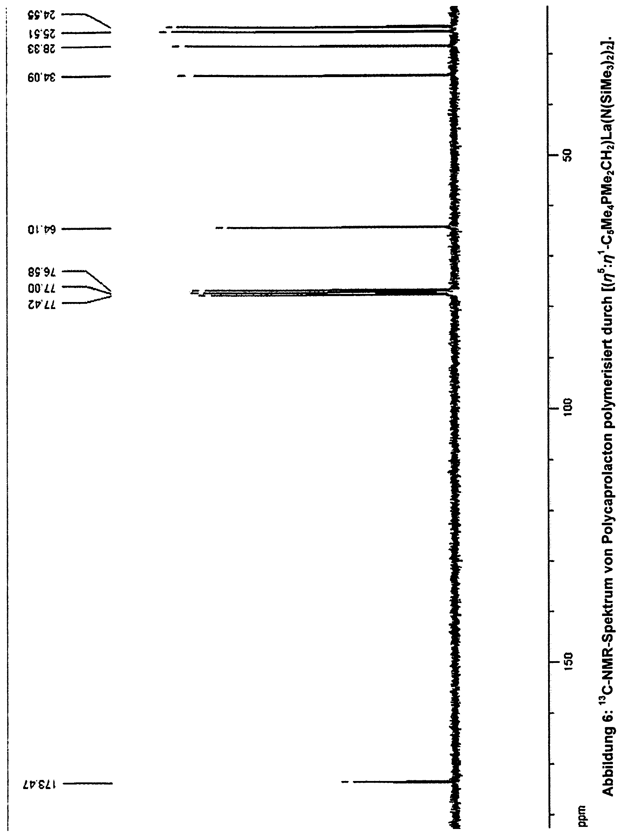

Im ³¹P-NMR-Spektrum gibt es keine Signale. Die Signale des ¹³C-NMR-Spektrums von Polycaprolacton der Versuche entsprechen alle denen der Literatur (Abbildung 6).

Die ermittelten Polydispersitäten (PD) liegen im Bereich um 2. Ein Indiz für eine lebende Polymerisation ist eine PD von 1.0, d.h. alle Ketten sind aus einer gleichen Anzahl an Monomereinheiten aufgebaut und sind somit gleichmäßig gewachsen. Allerdings kann natürlich auch die Initiierungsgeschwindigkeit langsamer als die Polymerisationsgeschwindigkeit sein. Daraus resultiert ebenfalls eine Differenz der Kettenlängen untereinander, was sich in einer PD >1 ausdrückt.

### Beispiel 17: Isoprenpolymerisation

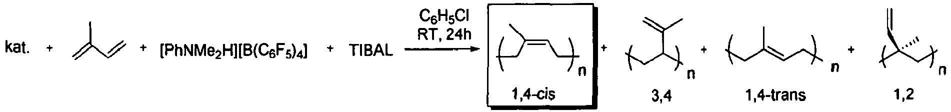

Präkatalysatorsynthese: 0.010 mmol (1.0 eq) des entsprechenden Liganden in 0.25 mL Benzol werden mit 0.011 mmol (1.1 eq) des entsprechenden SE(CH₂SiMe₃)₃thfₓ in 0.25 mL Benzol gelöst im NMR-Rohr zusammengeben. Mittels ³¹P-NMR-Spektroskopie wird die Zusammensetzung des Präkatalysators ermittelt. Prozentuale Angaben zur Bildung von Alkyl- oder ensprechenden Alkylidenverbindung sind in der untenstehenen Tabelle angegeben.
Nun wird die Lösung in einem Schlenkrohr mit 7.3 mL C₆H₅Cl aufgefüllt, um nach Zugabe aller Reagenzien ein Gesamtvolumen von 10 mL zu erreichen.
Nun wird 1 mL (680 mg) Isopren (10.0 mmol, 1000 eq) und daraufhin ein 1 mL einer [PhNHMe₂][B(C₆F₅)₄]-Lösung in C₆H₅Cl (8.012 mg/1 mL, 0.01 mmol, 1.0 eq) hinzugespritzt. Direkt im

Anschluss werden 0.2 mL einer Tri*iso*butylaluminium-Lösung in Toluol (0.1154 g/mL, 0.116 mmol, 11.6 eq).
Es wird 24h bei RT gerührt.
Anschließend wurde die viskose Lösung in 100 mL-250 mL HCl-sauere MeOH (0.2 mL HCl_{konz}), mit einer Spatelspitze 2,6-Di-*tert*-butyl-4-methylphenol als Stabilisator versetzt, gegeben. Es fällt sofort ein weißer Feststoff aus und die Lösung trübt sich. Die Reaktionsgefäße wurden mit wenigen mL CHCl₃ nachgespült, teilweise waren die Reaktionsmischungen so hochviskos, dass mehrfach nachgespült werden musste. Die Menge des Fällungsmittels betrug immer das zehnfache Volumen zur Polymerlösung, die hinzugefügt wurde. Es wurde über Nacht gerührt um eine vollständige Fällung zu gewährleisten. Am nächsten Tag wurde Polyisopren über einem **BÜCHNER**-**T**richter abfiltriert und bei RT im Vakuum drei Tage getrocknet.

Das Polymer wurde in ca. 10 mL-50 mL CHCl₃ gelöst, über einen Spritzenfilter filtriert (um evt. SE₂O₃ oder andere Verunreinigungen abzutrennen) und erneut in 100 mL-250 mL MeOH ausgefällt um eine hohe Reinheit für analytische Zwecke zu gewährleisten.
Das Polymer wurde mittels GPC, TGA, DSC und NMR-Spektroskopie analysiert.

**Tabelle: ³¹P-NMR-spektroskopische Kontrolle zeigt das Verhältnis von SE-Alkyl zu SE-Alkyliden-Verbindung direkt nach Zusammengeben der Reaktanden in Benzol [(C₅R¹R²₃PR³₂CH₂)SE(CH₂SiMe₃)₂]₂ (R¹ = tBu, Me; R² = H, Me; R³ = Me, Ph).**

| **Reaktanten** | 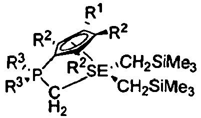 | 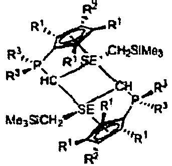 |
|---|---|---|
| 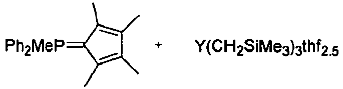 | 90% | 10% |
| 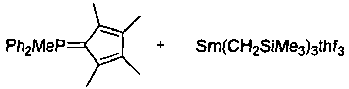 | 38% | 62% |
| 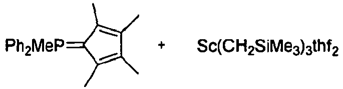 | 100% | -- |
| 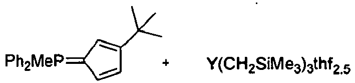 | 95% | 5% |
| 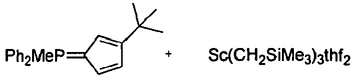 | 100% | -- |
| 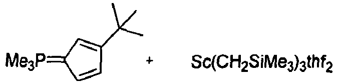 | 100% | -- |
| 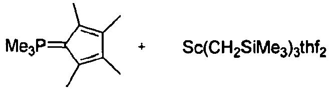 | 100% | -- |

**Tabelle: Isomere des Polyisoprens identifiziert via ¹H-NMR-Spektroskopie**

| Präkatalysator | Ausbeute | cis/% | 3,4/% | trans/% | 1,2/% |
|---|---|---|---|---|---|
| [(*η*⁵:*η*¹-C₅Me₄PPh₂CH₂)Y(CH₂(SiMe₃)₂] | 100% | 57.3 | 20.7 | 22.0 | - |
| [(*η*⁵:*η*¹-C₅Me₄PPh₂CH₂)Sm(CH₂SiMe₃)₂] | 100% | 16.4 | 83.6 | - | - |
| [(*η*⁵:*η*¹-C₅Me₄PPh₂CH₂)Sc(CH₂SiMe₃)₂] | 96.3% | 80.5 | 19.5 | - | - |
| [(*η*⁵:*η*¹-C₅H₃*t*BuPPh₂CH₂)Y(CH₂SiMe₃)₂] | 5.9% | 52.4 | 25.9 | 21.7 | - |
| [(*η*⁵:*η*¹-C₅H₃*t*BuPPh₂CH₂)Sc(CH₂SiMe₃)₂] | 13.2% | 80.0 | 12.1 | 7.9 | - |
| [(*η*⁵:*η*¹-C₅H₃*t*BuPMe₂CH₂)Sc(CH₂SiMe₃)₂] | 100% | 82.2 | 17.8 | | - |
| [(*η*⁵:*η*¹-C₅Me₄PMe₂CH₂)Sc(CH₂SiMe₂H)₂] | 4.1% | 28.6 | 30.9 | 40.5 | - |
| [Sc(CH₂SiMe₃)₃thf₂] | 100% | 60.5 | 20.7 | 18.8 | - |
| [Y(CH₂SiMe₃)₃thf₂] | 100% | 61.4 | 19.5 | 19.1 | - |
| [Sm(CH₂SiMe₃)₃thf₂] | 100% | 70.3 | 16.3 | 13.4 | - |
| [(*η*⁵:*η*¹-C₅Me₄PPh₂CH₂)Sc(CH₂SiMe₃)₂] ohne Borat, ohne TIBAL | 0% | --- | --- | --- | --- |

**Tabelle: Glasübergangstemperatur ermittelt durch DSC-Messungen.**

| **Präkatalysator** | **Glasübergang** |
|---|---|
| [(*η*⁵:*η*¹-C₅Me₄PPh₂CH₂)Y(CH₂SiMe₃)₂] | -51.1°C |
| [(*η*⁵:*η*¹-C₅Me₄PPh₂CH₂)Sm(CH₂SiMe₃)₂] | 6.3°C |
| [(*η*⁵:*η*¹-C₅Me₄PPh₂CH₂)Sc(CH₂SiMe₃)₂] | -50.83 |
| [(*η*⁵:*η*¹-C₅H₃*t*BuPPh₂CH₂)Y(CH₂SiMe₃)₂] | n. bestimmt |
| [(*η*⁵:*η*¹-C₅H₃*t*BuPPh₂CH₂)Sc(CH₂SiMe₃)₂] | -57.6°C |
| [(*η*⁵:*η*¹-C₅H₃*t*BuPMe₂CH₂)Sc(CH₂SiMe₃)₂] | -52.7°C |
| [(*η*⁵:*η*¹-C₅Me₄PMe₂CH₂)Sc(CH₂SiMe₃H)₂] | n. bestimmt |
| [Sc(CH₂SiMe₃)₃thf₂] | -51.3°C |
| [Y(CH₂SiMe₃)₃thf₂] | -53.5°C |
| [Sm(CH₂SiMe₃)₃thf₂] | -56.0°C |
| Naturkautschuk | -68°C |

| | |
|---|---|
| *nicht bestimmt, da keine Substanz mehr vorhanden war. Ausbeute < 6% | |

Mittels TGA-Messung konnte festgestellt werde, dass es bis zur Zersetzung bei ca. 390-450°C zu keinem signifikanten Abbau über 5% kommt. Die DSC-Messungen zeigen zudem, dass das Polymer mit einem Glaspunkt um -50°C und ohne Schmelzpunkt bis zur Zersetzung ideale Eigenschaften aufweist, die für ein Elastomer typisch sind.

**Tabelle: Polydispersität und Molekulargewichte mittels GPC ermittelt.**

| Präkatalysator | Mw/g/mol | PD |
|---|---|---|
| [(*η*⁵:*η*¹-C₅Me₄PPh₂CH₂)Y(CH₂SiMe₃)₂]* | >600.000 | |
| [(*η*⁵:*η*¹-C₅Me₄PPh₂CH₂)Sm(CH₂SiMe₃)₂]** | nicht bestimmbar | |
| [(*η*⁵:*η*¹-C₅Me₄PPh₂CH₂)Sc(CH₂SiMe₃)₂]* | >600.000 | |
| [(*η*⁵:*η*¹-C₅H₃*t*BuPPh₂CH₂)Y(CH₂SiMe₃)₂] | 70.3970 | 2.591 |
| [(*η*⁵:*η*¹-C₅H₃*t*BuPPh₂CH₂)Sc(CH₂SiMe₃)₂]* | >600.000 | |
| [(*η*⁵:*η*¹-C₅H₃*t*BuPMe₂CH₂)Sc(CH₂SiMe₃)₂]** | nicht bestimmbar | |
| [(*η*⁵:*η*¹-C₅Me₄PMe₂CH₂)Sc(CH₂SiMe₂H)₂]** | nicht bestimmbar | |
| [Sc(CH₂SiMe₃)₃thf₂]*** | ca. 60.000 | |
| [Y(CH₂SiMe₃)₃thf₂]*** | ca. 75.000 | |
| [Sm(CH₂SiMe₃)₃thf₂] | 367.700 | 3.099 |
| Naturkautschuk | 2-4×10⁵ | 3-10 |

| | | |
|---|---|---|
| *Molekulargewicht so groß, landet im Aussschlussvolumen (größer 10°), Mw lässt sich nicht genau ermitteln. **Proben lösen sich schlecht in THF bzw. lassen sich nicht vollständig durch den Spritzenfilter drücken. *** Kurve besitzt mehr als ein Maximum, bimodale Verteilung | | |

Die ermittelten Polydispersitäten (PD) liegen gleichfalls im Bereich um 2. Auch in diesem Fall starten die Katalysatoren die Polymerisation so schnell, dass die Polymerisationsgeschwindigkeit größer ist als die Initiierungsgeschwindigkeit. Zudem sind die Ketten außergewöhnlich lang, sodass eine Messung, die einen exakten Wert Mw/g/mol liefert, nicht möglich ist. Ohne die Bestimmung von Mw lassen sich keine Polydispersitäten ermittel, die aber in der Synthese des Naturkautschuks keine große Rolle spielen. (Naturkautschuk: PD 3-10)

## Patentansprüche

1. *η*⁵:*η*¹-Cyclopentadienyliden-phosphoran-Constrained-Geometry-Komplexe der Seltenerdmetalle (*η*⁵:*η*¹-CpPC-CGC), der allgemeinen Formel 1 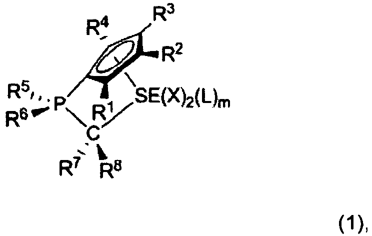 wobei
SE = Sc, Y, La, Ce, Pr, Nd, Pm, Sm, Eu, Gd, Tb, Dy, Ho, Er, Tm, Yb oder Lu;
X = unabhängig voneinander ein monoanionischer Diorganoamido-, Bistrimethylsilylamido-, Halogenido-, Alkyl-, Aryl-, Alkoxo-, Aryloxo- oder Alkylaluminat (AIR₄⁻)-Substituent;
L = Neutralligand und /oder Solvensmolekül;
R¹, R⁴ = unabhängig voneinander H oder Methyl;
R², R³ = unabhängig voneinander H oder Methyl oder tertiär-Butyl oder gemeinsam ein substituierter Cycloalkylrest;
R⁵, R⁶ = Methyl, n-Butyl, tertiär-Butyl oder Phenyl;
R⁷, R⁸ = unabhängig voneinander H, Trimethylsilyl, Alkyl mit bis 1 - 10 C-Atomen oder mono- oder polycyclisches Aryl mit 6 bis 20 C-Atomen,
sowie
m = 0, 1, 2 oder 3 ist.

2. *η*⁵:*η*¹-Cyclopentadienyliden-phosphoran-Constrained-Geometry-Komplexe der Seltenerdmetalle (*η*⁵:*η*¹-CpPC-CGC), der allgemeinen Formel 2 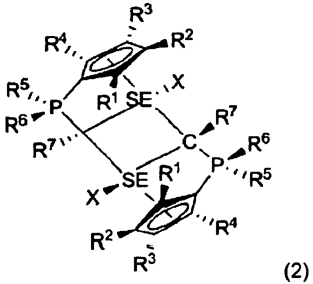 wobei
SE = Sc, Y, La, Ce, Pr, Nd, Pm, Sm, Eu, Gd, Tb, Dy, Ho, Er, Tm, Yb oder Lu;
X = unabhängig voneinander ein monoanionischer Diorganoamido-, Bistrimethylsilylamido-, Halogenido-, Alkyl-, Aryl-, Alkoxo-, Aryloxo- oder Alkylaluminat (AIR₄⁻)-Substituent;
R¹, R⁴= unabhängig voneinander H oder Methyl;
R², R³ = unabhängig voneinander H oder Methyl oder tertiär-Butyl oder gemeinsam ein substituierter Cycloalkylrest;
R⁵, R⁶ = Methyl, n-Butyl, tertiär-Butyl oder Phenyl;
R⁷ = unabhängig voneinander H, Trimethylsilyl, Alkyl mit bis 1 - 10 C-Atomen oder mono- oder polycyclisches Aryl mit 6 bis 20 C-Atomen ist.

3. *η*⁵:*η*¹-CpPC-CGC nach Anspruch 1 oder 2, **dadurch gekennzeichnet, dass**
SE = Sc, Y, La, Ce, Nd, Sm oder Lu ist.

4. *η*⁵:*η*¹-CpPC-CGC nach Anspruch 1 oder 2, **dadurch gekennzeichnet, dass**
X = Hexamethylendisilazanid, N, N -Dimethylbenzylamin orthometalliert, N, N, α-Trimethylbenzylamin orthometalliert ist.

5. *η*⁵:*η*¹-CpPC-CGC nach Anspruch 1, **dadurch gekennzeichnet, dass** der Neutralligand PR₃, NR₃, Pyridin, wobei R = ein Alkyl mit bis 1 - 10 C-Atomen oder ein mono- oder polycyclisches Aryl mit 6 bis 20 C-Atomen und das Solvensmolekül THF, Ether, DMF, DMSO, HMPT, Tetrahydropyran, Tetrahydrothiofuran ist.

6. *η*⁵:*η*¹-CpPC-CGC nach einem der Ansprüche 1 bis 5, **dadurch gekennzeichnet, dass** es aus der Gruppe bestehend aus:
[(*η*⁵:*η*¹-C₅Me₄PMe₂CH₂)Y(N(SiMe₃)₂)₂], [(*η*⁵:*η*¹-C₅Me₄PMe₂CH₂)Sm(N(SiMe₃)₂)₂],
[(*η*⁵:*η*¹-C₅Me₄PMe₂CH₂)Nd(N(SiMe₃)₂)₂], [(*η*⁵:*η*¹-C₅Me₄PMe₂CH₂)Ce(N(SiMe₃)₂)₂],
[(*η*⁵:*η*¹-C₅Me₄PMe₂CH₂)La(N(SiMe₃)₂)₂], [(*η*⁵:*η*¹-C₅H₃*t*BuPMe₂CH₂)Ce(N(SiMe₃)₂)₂],
[(*η*⁵:*η*¹-C₅H₃*t*BuPMe₂CH₂)La(N(SiMe₃)₂)₂], [(*η*⁵:*η*¹-C₅H₃*t*BuPMe₂CH₂)Nd(N(SiMe₃)₂)₂],
[(*η*⁵:*η*¹-C₅Me₄PMe₂CH₂)Nd(N(SiMe₂H)₂)₂], [(*η*⁵:*η*¹-C₅Me₄PPh₂CH₂)Y(CH₂SiMe₃)₂],
[(*η*⁵:*η*¹-C₅Me₄PPh₂CH₂)Sm(CH₂SiMe₃)₂], [(*η*⁵:*η*¹-C₅Me₄PPh₂CH₂)Sc(CH₂SiMe₃)₂],
[(*η*⁵:*η*¹-C₅H₃*t*BuPPh₂CH₂)Y(CH₂SiMe₃)₂], [(*η*⁵:*η*¹-C₅Me₄PMe₂CH₂)Sc(CH₂SiMe₃)₂],
[(*η*⁵:*η*¹-C₅H₃*t*BuPMe₂CH₂)Sc(CH₂SiMe₃)₂] ausgewählt ist.

7. Verfahren nach einem der Ansprüche 1 bis 6, **dadurch gekennzeichnet, dass** ein CH-acides Cyclopentadienylidenphosphoran mit einem Seltenenerdmetall-Ligandenkomplex in einem aprotischen Lösemittel im Temperaturbereich von -20°C bis 120°C umgesetzt wird.

8. Verfahren nach Anspruch 7, **dadurch gekennzeichnet, dass** die Umsetzung als Amineleminierung, Salzeleminierung oder Kohlenwasserstoffeleminierung erfolgt.

9. Verfahren nach Anspruch 7 oder 8, **dadurch gekennzeichnet, dass** Umsetzung in Aromaten, Kohlenwasserstoffen, Ethern oder in Gemischen aus diesen Lösemitteln vorgenommen wird.

10. Verfahren nach einem der Ansprüche 7 bis 9, **dadurch gekennzeichnet, dass** das CH-acide Cyclopentadienylidenphosphoran mit dem Seltenenerdmetall-Ligandenkomplex im Molverhältnis von 0,8 : 1 bis 1,2 : 1 umgesetzt wird.

11. Verfahren nach einem der Ansprüche 7 bis 10, **dadurch gekennzeichnet, dass** das CH-acide Cyclopentadienylidenphosphoran mit dem Seltenenerdmetall-Ligandenkomplex in äquimolaren Mengen umgesetzt wird.

12. Verwendung der *η*⁵:*η*¹-CpPC-CGC nach Anspruch 1 bis 6 als Reagenz oder Katalysator für organische Reaktionen.

13. Verwendung nach Anspruch 12 als Katalysator für Ringöffnungspolymerisationen zur Herstellung von Polyestern.

14. Verwendung nach Anspruch 12 als Präkatalysator für die Polymerisation von Olefinen.

15. Verwendung nach Anspruch 14 als Präkatalysator für die Polymerisation von konjugierten Olefinen.

## Claims

1. η⁵:η¹-Cyclopentadienylidene-phosphorane-constrained geometry complexes of the rare earth metals (η⁵:η¹-CpPC-CGC) of general formula 1 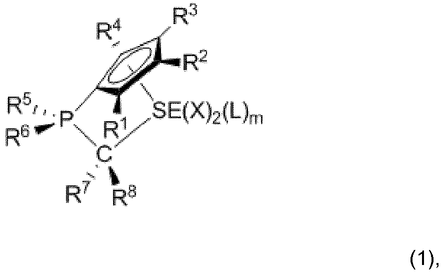 wherein
SE = Sc, Y, La, Ce, Pr, Nd, Pm, Sm, Eu, Gd, Tb, Dy, Ho, Er, Tm, Yb or Lu;
X = independently of one another, a monoanionic diorganoamido-, bistrimethylsilylamido-, halido-, alkyl-, aryl-, alkoxo-, aryloxo- or alkylaluminate (AlR₄⁻) substituent;
L = a neutral ligand and/or solvent molecule;
R¹, R⁴ = independently of one another, H or methyl;
R², R³ = independently of one another, H or methyl or tertiary butyl or together a substituted cycloalkyl radical;
R⁵, R⁶ = methyl, n-butyl, tertiary butyl or phenyl;
R⁷, R⁸ = independently of one another, H, trimethylsilyl, alkyl having up to 1-10 carbon atoms
or mono- or polycyclic aryl having 6 to 20 carbon atoms, and
m is 0, 1, 2 or 3.

2. η⁵:η¹-Cyclopentadienylidene-phosphorane-constrained geometry complexes of the rare earth metals (η⁵:η¹-CpPC-CGC) of general formula 2 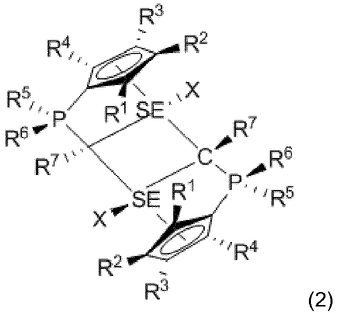 wherein
SE = Sc, Y, La, Ce, Pr, Nd, Pm, Sm, Eu, Gd, Tb, Dy, Ho, Er, Tm, Yb or Lu;
X = independently of one another, a monoanionic diorganoamido-, bistrimethylsilylamido-, halido-, alkyl-, aryl-, alkoxo-, aryloxo- or alkylaluminate (AlR₄⁻) substituent;
R¹, R⁴ = independently of one another, H or methyl;
R², R³ = independently of one another, H or methyl or tertiary butyl or together a substituted cycloalkyl radical;
R⁵, R⁶ = methyl, n-butyl, tertiary butyl or phenyl;
R⁷ = independently of one another, H, trimethylsilyl, alkyl having up to 1-10 carbon atoms
or mono- or polycyclic aryl having 6 to 20 carbon atoms.

3. η⁵:η¹-CpPC-CGC according to claim 1 or 2, **characterised in that**
SE = Sc, Y, La, Ce, Nd, Sm or Lu.

4. η⁵:η¹-CpPC-CGC according to claim 1 or 2, **characterized in that**
X = hexamethylenedisilazanide, orthometallated N,N-dimethylbenzylamine, orthometallated N,N,α-trimethylbenzylamine.

5. η⁵:η¹-CpPC-CGC according to claim 1, **characterised in that** the neutral ligand is PR₃, NR₃, pyridine, wherein R = an alkyl having up to 1-10 carbon atoms or a mono- or polycyclic aryl having 6 to 20 carbon atoms and the solvent molecule is THF, ether, DMF, DMSO, HMPT, tetrahydropyran, tetrahydrothiofuran.

6. η⁵:η¹-CpPC-CGC according to one of claims 1 to 5, **characterised in that** it is selected from the group consisting of:
[(η⁵:η¹-C₅Me₄pMe₂CH₂)Y(N(SiMe₃)₂)₂],
[(η⁵:η¹-C₅Me₄PMe₂CH₂)Sm(N(SiMe₃)₂)₂],
[(η⁵:η¹-C₅Me₄PMe₂CH₂)Nd(N(SiMe₃)₂)₂],
[(η⁵:η¹-C₅Me₄PMe₂CH₂)Ce(N(SiMe₃)₂)₂],
[(η⁵:η¹-C₅Me₄PMe₂CH₂)La(N(SiMe₃)₂)₂],
[(η⁵:η¹-C₅H₃*t*BuPMe₂CH₂)Ce(N(SiMe₃)₂)²],
[(η⁵:η¹-C₅H₃*t*BuPMe₂CH₂)La(N(SiMe₃)₂)₂],
[(η⁵:η¹-C₅H₃tBuPMe₂CH₂)Nd(N(SiMe₃)₂)₂],
[(η⁵:η¹-C₅Me₄PMe₂CH₂)Nd(N(SiMe₂H)₂)₂],
[(η⁵:η¹-C₅Me₄PPh₂CH₂)Y(CH₂SiMe₃)₂],
[(η⁵:η¹-C₅Me₄PPh₂CH₂)Sm(CH₂SiMe₃)₂],
[(η⁵:η¹ C₅Me₄PPh₂CH₂) Sc(CH₂SiMe₃)₂],
[(η⁵:η¹-C₅H₃*t*BuPPh₂CH₂)Y(CH₂SiMe₃)₂],
[(η⁵:η¹-C₅Me₄PMe₂CH₂)Sc(CH₂SiMe₃)₂],
[(η⁵:η¹-C₅H₃*t*BuPMe₂CH₂)Sc(CH₂SiMe₃)₂].

7. The process according to any one of claims 1 to 6, **characterised in that** a CH-acidic cyclopentadienylidenephosphorane is reacted with a rare earth metal ligand complex in an aprotic solvent in the temperature range from -20 °C to 120 °C.

8. The process according to claim 7, **characterised in that** the reaction is carried out as amine elimination, salt elimination or hydrocarbon elimination.

9. The process according to claim 7 or 8, **characterised in that** the reaction is carried out in aromatics, hydrocarbons, ethers or in mixtures of these solvents.

10. The process according to claims 7 to 9, **characterised in that** the CH-acidic cyclopentadienylidenephosphorane is reacted with the rare earth metal ligand complex in the molar ratio of 0.8 : 1 to 1.2 : 1.

11. The process according to any one of claims 7 to 10, **characterised in that** the CH-acidic cyclopentadienylidenephosphorane is reacted with the rare earth metal ligand complex in equimolar amounts.

12. Use of the η⁵:η¹-CpPC-CGC according to claims 1 to 6 as a reagent or catalyst for organic reactions.

13. The use according to claim 12 as a catalyst for ring-opening polymerizations for the preparation of polyesters.

14. The use according to claim 12 as a precatalyst for the polymerization of olefins.

15. The use according to claim 14 as a precatalyst for the polymerization of conjugated olefins.

## Revendications

1. Complexes à géométrie contrainte de *η*⁵:*η*¹-cyclopentadiénylidène-phosphorane des métaux de terres rares (*η*⁵:*η*¹-CpPC-CGC), de formule générale 1 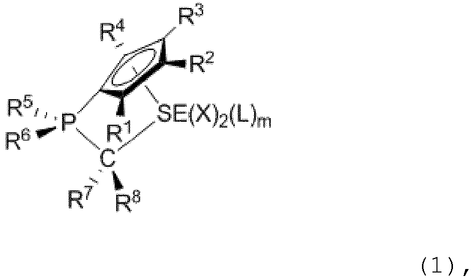 dans laquelle
SE = Sc, Y, La, Ce, Pr, Nd, Pm, Sm, Eu, Gd, Tb, Dy, Ho, Er, Tm, Yb ou Lu ; X = indépendamment les uns des autres, un substituant mono-anionique di-organoamido, bistriméthylsilylamido, halogénido, alkyle, aryle, alcoxo, aryloxo ou aluminate d'alkyle (AlR₄⁻) ;
L = ligand neutre et /ou molécule de solvant ;
R¹, R⁴ = indépendamment les uns des autres, H ou un groupe méthyle ;
R², R³ = indépendamment les uns des autres, H ou un radical méthyle ou butyle tertiaire ou conjointement, un radical cycloalkyle substitué ;
R⁵, R⁶ = un groupe méthyle, n-butyle, butyle tertiaire ou phényle ;
R⁷, R⁸ = indépendamment les uns des autres H, un groupe triméthylsilyle, alkyle comportant jusqu'à 1 à 10 atomes de carbone ou un groupe aryle monocyclique ou polycyclique comportant 6 à 20 atomes de carbone,
ainsi que
m = 0, 1, 2 ou 3.

2. Complexes à géométrie contrainte de *η*⁵:*η*¹-cyclopentadiénylidène-phosphorane des métaux de terre rare (*η*⁵:*η*¹-CpPC-CGC), de formule générale 2 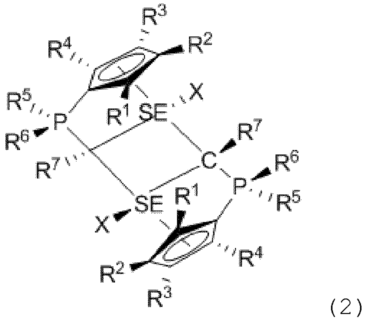 dans laquelle
SE = Sc, Y, La, Ce, Pr, Nd, Pm, Sm, Eu, Gd, Tb, Dy, Ho, Er, Tm, Yb ou Lu ;
X = indépendamment les uns des autres, un substituant mono-anionique di-organoamido, bistriméthylsilylamido, halogénido, alkyle, aryle, alcoxo, aryloxo ou aluminate d'alkyle (AlR₄⁻) ;
R¹, R⁴ = indépendamment les uns des autres, H ou un groupe méthyle ;
R² = indépendamment les uns des autres, H ou un groupe méthyle ou butyle tertiaire ou conjointement, un radical cycloalkyle substitué ;
R⁵, R⁶ = un groupe méthyle, n-butyle, butyle tertiaire ou phényle ;
R⁷ = indépendamment les uns des autres, H, un groupe triméthylsilyle, alkyle comportant jusqu'à 1 à 10 atomes de carbone ou un groupe aryle monocyclique ou polycyclique comportant 6 à 20 atomes de carbone.

3. *η*⁵:*η*¹-CpPC-CGC selon la revendication 1 ou 2, **caractérisé en ce que**
SE = Sc, Y, La, Ce, Nd, Sm ou Lu.

4. *η*⁵:*η*¹-CpPC-CGC selon la revendication 1 ou 2, **caractérisé en ce que**
X = un groupe hexaméthylènedisilazanide, N, N - diméthylbenzylamine orthométallé, N, N, α-triméthylbenzylamine orthométallé.

5. *η*⁵:*η*¹-CpPC-CGC selon la revendication 1, **caractérisé en ce que** le ligand neutre est PR₃, NR₃, un groupe pyridine, dans lequel R = un groupe alkyle comportant jusqu'à 1 à 10 atomes de carbone ou un groupe aryle monocyclique ou polycyclique comportant 6 à 20 atomes de carbone et la molécule de solvant est du THF, de l'éther, du DMF, du DMSO, du HMPT, du tétrahydropyrane, du tétrahydrothiofurane.

6. *η*⁵:*η*¹-CpPC-CGC selon l'une des revendications 1 à 5, **caractérisé en ce qu'**il est choisi dans le groupe consistant en :
[(*η*⁵:*η*¹-C₅Me₄PMe₂CH₂)Y(N(SiMe₃)₂)₂],
[(*η*⁵:*η*¹-C₅Me₄PMe₂CH₂)Sm(N(SiMe₃)₂)₂],
[(*η*⁵:*η*¹-C₅Me₄PMe₂CH₂)Nd(N(SiMe₃)₂)₂],
[(*η*⁵:*η*¹-C₅Me₄PMe₂CH₂)Ce(N(SiMe₃)₂)₂],
[(*η*⁵:*η*¹-C₅Me₄PMe₂CH₂)La(N(SiMe₃)₂)₂],
[(*η*⁵:*η*¹-C₅H₃*t*BuPMe₂CH₂)Ce(N(SiMe₃)₂)₂],
[(*η*5:*η*¹-C₅H₃*t*BuPMe₂CH₂)La(N SiMe₃)₂)₂],
[(*η*⁵:*η*¹-C₅H₃*t*BuPMe₂CH₂)Nd(N(SiMe₃)₂)₂],
[(*η*⁵:*η*¹-C₅Me₄PMe₂CH₂)Nd(N(SiMe₂H)₂)₂],
[(*η*⁵:*η*¹-C₅Me₄PPh₂CH₂)Y(CH₂SiMe₃)₂],
[(*η*⁵:*η*¹-C₅Me₄PPh₂CH₂)Sm(CH₂SiMe₃)₂],
[(*η*⁵:*η*¹-C₅Me₄PPh₂CH₂)Sc(CH₂SiMe₃)₂],
[(*η*⁵:*η*¹-C₅H₃*t*BuPPh₂CH₂)Y(CH₂SiMe₃)₂],
[(*η*⁵:*η*¹-C₅Me₄PMe₂CH₂)Sc(CH₂SiMe₃)₂],
[(*η*⁵:*η*¹-C₅H₃*t*BuPMe₂CH₂)Sc(CH₂SiMe₃)₂].

7. Procédé selon l'une des revendications 1 à 6, **caractérisé en ce qu'**un groupe cyclopentadiénylidène-phosphorane CH-acide est converti avec un complexe de métal de terres rares - ligand en un solvant aprotique dans la plage de températures de -20°C à 120 °C.

8. Procédé selon la revendication 7, **caractérisé en ce que** la conversion s'effectue sous la forme d'élimination d'amine, d'élimination de sel ou d'élimination d'hydrocarbure.

9. Procédé selon la revendication 7 ou 8, **caractérisé en ce que** la conversion est entreprise dans des composés aromatiques, des hydrocarbures, des éthers ou dans des mélanges de ces solvants.

10. Procédé selon l'une des revendications 7 à 9, **caractérisé en ce que** le cyclopentadiénylidène-phosphorane CH-acide est converti avec le complexe de ligands de terres rares en un rapport molaire de 0,8 : 1 à 1,2 : 1.

11. Procédé selon l'une des revendications 7 à 10, **caractérisé en ce que** le cyclopentadiénylidène-phosphorane CH-acide est converti avec le complexe de métaux de terres rares en quantités équimolaires.

12. Utilisation du *η*⁵:*η*¹-CpPC-CGC selon la revendication 1 à 6, comme réactif ou catalyseur pour des réactions organiques.

13. Utilisation selon la revendication 12, comme catalyseur pour des polymérisations par ouverture de cycle pour la production de polyesters.

14. Utilisation selon la revendication 12, comme pré-catalyseur pour la polymérisation d'oléfines.

15. Utilisation selon la revendication 14, comme pré-catalyseur pour la polymérisation d'oléfines conjuguées.
